(19) Europäisches Patentamt
European Patent Office
Office européen des brevets

(11) **EP 4 235 665 A1**

(12) **EUROPEAN PATENT APPLICATION**
published in accordance with Art. 153(4) EPC

(43) Date of publication:
**30.08.2023 Bulletin 2023/35**

(21) Application number: **21891194.9**

(22) Date of filing: **11.11.2021**

(51) International Patent Classification (IPC):
**G11B 7/0045** $^{(2006.01)}$

(52) Cooperative Patent Classification (CPC):
**G11B 7/0045; G11B 7/09; G11B 7/1362**

(86) International application number:
**PCT/CN2021/130165**

(87) International publication number:
**WO 2022/100674 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.11.2020 CN 202011265387**

(71) Applicant: **Huawei Technologies Co., Ltd.
Shenzhen, Guangdong 518129 (CN)**

(72) Inventors:
• **TANG, Hongwei
Shenzhen, Guangdong 518129 (CN)**
• **XU, Jun
Shenzhen, Guangdong 518129 (CN)**
• **XU, Jia
Shenzhen, Guangdong 518129 (CN)**

(74) Representative: **Maiwald GmbH
Engineering
Elisenhof
Elisenstrasse 3
80335 München (DE)**

(54) **DATA READ/WRITE SYSTEM AND METHOD**

(57) This application relates to the field of optical storage technologies, and discloses a data read/write system and method. The method can be used to improve a read/write speed of optical storage without increasing a rotational speed of an optical storage medium. The system includes an optical deflector and a read/write optical head. The optical deflector is configured to sequentially deflect a first optical signal by a plurality of angles, to obtain a plurality of second optical signals. The read/write optical head is configured to receive the plurality of second optical signals, and separately focus the plurality of second optical signals on the optical storage medium, to implement reading/writing of a plurality of data points.

FIG. 14

## Description

## TECHNICAL FIELD

This application relates to the field of optical storage technologies, and in particular, to a data read/write system and method.

## BACKGROUND

With the development of information technologies, amounts of computing and storage of various information increase exponentially. As an important means of information storage, optical storage is widely used.

In the conventional optical storage technology, a read/write optical head used for an emergent optical signal is usually fastened, and a high-speed rotational motor is used to drive an optical storage medium (for example, an optical disc) to rotate at a high speed, so as to implement reading/writing of data on the optical storage medium through the optical signal. To improve a data read/write speed, a conventional practice is increasing a rotational speed of the optical storage medium. However, increasing the rotational speed of the optical storage medium results in louder jitter noise of the optical storage medium and larger difficulty of optical path servo.

Based on this, how to improve a read/write speed of optical storage without increasing a rotational speed of an optical storage medium is an urgent technical problem.

## SUMMARY

This application provides a data read/write system and method, to improve a read/write speed of optical storage without increasing a rotational speed of an optical storage medium.

To achieve the objective, this application provides the following technical solutions.

According to a first aspect, this application provides a data read/write system. The system includes: an optical deflector, configured to sequentially deflect a first optical signal by a plurality of angles, to obtain a plurality of second optical signals; and a read/write optical head, configured to: receive the plurality of second optical signals, and separately focus the plurality of second optical signals on an optical storage medium, to implement reading/writing of a plurality of data points.

According to the data read/write system provided in this application, the optical deflector can sequentially deflect the first optical signal used to read/write data, to implement reading/writing of a row of data points on the optical storage medium. The data read/write system provided in this application reads/writes data on/into the moving optical storage medium, to implement, by controlling a single optical signal without increasing a rotational speed of the optical storage medium, simultaneously reading/writing of a plurality of data channels in a data band on the optical storage medium, and implement, through the single optical signal, effect of reading/writing data in parallel. This improves data read/write efficiency of the data read/write system.

In a possible design, the system further includes: a mobile platform, configured to accommodate the optical storage medium, and configured to control the optical storage medium to rotate or translate on a plane perpendicular to an axial direction of the read/write optical head, where the optical deflector is specifically configured to sequentially deflect the first optical signal by the plurality of angles in each of a plurality of preset periods, to obtain the plurality of second optical signals; and the read/write optical head is further configured to receive the plurality of second optical signals in each preset period, and separately focus the plurality of second optical signals on the optical storage medium, to implement reading/writing of a plurality of data channels, where the plurality of data channels include the plurality of data points, and the plurality of data channels one-to-one correspond to the plurality of data points.

In this possible design, the data read/write system provided in this application reads/writes the data on/into the moving optical storage medium, to implement, by controlling the single optical signal without increasing the rotational speed of the optical storage medium, simultaneously reading/writing of the plurality of data channels in the data band on the optical storage medium, and implement, through the single optical signal, effect of reading/writing data in parallel. This improves data read/write efficiency of the data read/write system.

In another possible design, the optical deflector includes at least one of the following devices: a multi-faceted rotating mirror, a vibrating mirror, an acousto-optic deflector, or an electro-optic deflector.

In this possible design, the data read/write system provided in this application can meet different design requirements.

In another possible design, the plurality of data channels include at least one servo channel, and a plurality of servo points on the servo channel are discretely distributed, where the servo point is used to adjust, when the data read/write system reads data, a position of a focus of an optical signal focused by the read/write optical head.

In another possible design, a distance between any two adjacent servo points in the plurality of servo points is greater than or equal to a preset distance.

In the two possible designs, servo can be performed when the data read/write system reads the data. This improves accuracy when the data read/write system reads the data.

In another possible design, the optical storage medium includes a plurality of storage layers, servo points at the plurality of storage layers are discretely distributed in the axial direction of the read/write optical head, and the servo point is used to adjust, when the data read/write system reads the data, the position of the focus of the optical signal focused by the read/write optical head.

In this possible design, when the optical storage medium includes the plurality of storage layers, and the data read/write system reads a servo point at a storage layer far away from the read/write optical head, attenuation of an optical signal used to read the servo point can be reduced, so that the servo point can accurately serve the data read-write system. This improves accuracy when the data read-write system reads the data.

In another possible design, the plurality of data channels form one data band, and the system further includes: a radial mobile station, configured to move the optical deflector and the read/write optical head in the data read/write system by the preset distance on the plane perpendicular to the axial direction of the read/write optical head after reading/writing of a first data band at a first storage layer of the plurality of storage layers of the optical storage medium is completed, to implement reading/writing of a second data band at the first storage layer, where the first storage layer includes a plurality of data bands.

In this possible design, reading/writing of the entire optical storage medium can be implemented.

In another possible design, the system further includes: a signal processing module, configured to receive a third optical signal when the data read/write system reads the data, and configured to: when the third optical signal is a servo optical signal, generate, based on the third optical signal, a servo control signal used to adjust a position of a focus of an optical signal focused by the read/write optical head in the data read-write system, or configured to: when the third optical signal is a data optical signal, determine, based on the third optical signal, to-be-read data, where the third optical signal is an optical signal returned by the optical storage medium after any one of the plurality of second optical signals acts on any data point on the optical storage medium; and if the any data point is a servo point, the third optical signal is the servo optical signal; or if the any data point is used to store data, the third optical signal is the data optical signal.

In another possible design, the system further includes: a light source component, configured to obtain the first optical signal.

According to a second aspect, this application provides a data read/write method, applied to a data read/write system. The method includes: sequentially deflecting a first optical signal by a plurality of angles, to obtain a plurality of second optical signals; and focusing the plurality of second optical signals on an optical storage medium, to implement reading/writing of a plurality of data points.

In a possible design, the method further includes: controlling the optical storage medium to rotate or translate on a plane perpendicular to an axial direction of a read/write optical head in the data read/write system; the "sequentially deflecting a first optical signal by a plurality of angles, to obtain a plurality of second optical signals" specifically includes: sequentially deflecting the first optical signal by the plurality of angles in each of a plurality of preset periods, to obtain the plurality of second optical signals; and the method further includes: focusing the plurality of second optical signals on the optical storage medium in each preset period, so as to implement reading and writing of a plurality of data channels, where the plurality of data channels include the plurality of data points, and the plurality of data channels one-to-one correspond to the plurality of data points.

In another possible design, the "sequentially deflecting a first optical signal by a plurality of angles, to obtain a plurality of second optical signals" specifically includes: sequentially deflecting, by an optical deflector in the data read/write system, the first optical signal by the plurality of angles, to obtain the plurality of second optical signals, where the optical deflector includes at least one of the following devices: a multi-faceted rotating mirror, a vibrating mirror, an acousto-optic deflector, or an electro-optic deflector.

In another possible design, the plurality of data channels include at least one servo channel, and a plurality of servo points on the servo channel are discretely distributed, where the servo point is used to adjust, when the data read/write system reads data, a position of a focus of an optical signal focused by the read/write optical head.

In another possible design, a distance between any two adjacent servo points in the plurality of servo points is greater than or equal to a preset distance.

In another possible design, the optical storage medium includes a plurality of storage layers, servo points at the plurality of storage layers are discretely distributed in the axial direction of the read/write optical head in the data read/write system, and the servo point is used to adjust, when the data read/write system reads data, the position of the focus of the optical signal focused by the read/write optical head.

In another possible design, the plurality of data channels form one data band, and the method further includes: after completing a read/write operation on a first data band at a first storage layer of the plurality of storage layers of the optical storage medium, moving the optical deflector and the read/write optical head in the data read/write system by the preset distance on the plane perpendicular to the axial direction of the read/write optical head, to implement reading/writing of a second data band at the first storage layer, where the first storage layer includes a plurality of data bands.

In another possible design, the method further includes: when a third optical signal is a servo optical signal, generating, based on the third optical signal, a servo control signal used to adjust a position of a focus of an optical signal focused by the read/write optical head in the data read-write system; or when the third optical signal is a data optical signal, determining, based on the third optical signal, to-be-read data, where the third optical signal is an optical signal returned by the optical storage medium after any one of the plurality of second optical signals acts on any data point on the optical storage medium; and if the any data point is a servo point, the third optical signal is the servo optical signal; or if the any data point is used to store data, the third optical signal is the data optical signal.

In another possible design manner, before the "sequentially deflecting a first optical signal by a plurality of angles, to obtain a plurality of second optical signals", the method further includes: generating the first optical signal.

For explanations and beneficial effect of the data read/write method provided in the second aspect, refer to explanations and beneficial effect of the data read/write system provided in any one of the first aspect and the possible designs of the first aspect. Details are not described again.

According to a third aspect, this application provides a data read/write control apparatus. The data read/write control apparatus includes a processor and a memory. The processor is configured to invoke, from the memory, a computer program stored in the memory, and run the computer program, to control a data read/write system to perform the data read/write method in any one of the second aspect and the possible designs of the second aspect.

According to a fourth aspect, this application provides a computer program product. When the computer program product runs on a data read/write control apparatus, the data read/write system is controlled to perform the data read/write method in any one of the second aspect and the possible designs of the second aspect.

According to a fifth aspect, this application provides a computer-readable storage medium, for example, a non-transitory computer-readable storage medium. The computer-readable storage medium stores computer programs (or instructions). When the computer programs (or the instructions) are run on a data read/write control apparatus, the data read/write system is controlled to perform the data read/write method provided in the second aspect.

It may be understood that any data read/write control apparatus, computer program product, computer storage medium, or the like provided above is applied to the corresponding method provided above. Therefore, for beneficial effect that can be achieved, refer to beneficial effect in the corresponding method. Details are not described herein again.

In this application, names of the data read/write system and the data read/write control apparatus do not constitute a limitation on the devices or the function modules. In actual implementation, the devices or the function modules may appear with other names. The devices or the function modules fall within the scope of the claims in this application and their equivalent technologies, provided that functions of the devices or the function modules are similar to those in this application.

These aspects or other aspects in this application are more concise and comprehensible in the following descriptions.

**BRIEF DESCRIPTION OF DRAWINGS**

FIG. 1 is a schematic diagram of deflecting an optical signal by an acousto-optical deflector in the conventional technology;
FIG. 2 is a schematic diagram of a focusing error in a data read system according to an embodiment of this application;
FIG. 3 is a schematic diagram of a tracking error in a data read system according to an embodiment of this application;
FIG. 4 is a schematic diagram 1 of a structure of a data read/write system according to an embodiment of this application;
FIG. 5 is a schematic diagram of a structure of a light source component according to an embodiment of this application;
FIG. 6 is a schematic diagram 2 of a structure of a data read/write system according to an embodiment of this application;
FIG. 7 is a schematic diagram of sequentially deflecting, by an optical deflector, three optical pulse signals in a first optical signal received in a preset period by different angles according to an embodiment of this application;
FIG. 8 is a schematic diagram of writing data points into an optical storage medium by a read/write optical head according to an embodiment of this application;
FIG. 9 is a schematic diagram 3 of a structure of a data read/write system according to an embodiment of this application;
FIG. 10 is a schematic diagram of writing different data bands by a data read/write system by controlling a radial mobile station to move a preset distance according to an embodiment of this application;
FIG. 11 is a schematic diagram of servo points discretely distributed on circular servo channels overlapping in an axial direction according to an embodiment of this application;
FIG. 12 is a schematic diagram of servo channels that are in data bands overlapping in an axial direction at each of a plurality of storage layers and do not overlap in the axial direction according to an embodiment of this application;
FIG. 13 is a schematic diagram of servo points distributed on circular servo channels overlapping in an axial direction according to an embodiment of this application;
FIG. 14 is a schematic diagram 4 of a structure of a data read/write system according to an embodiment of this application;
FIG. 15 is a schematic diagram of moving a reflector by using a third mobile platform, to adjust, in a radial direction, a position of a focus of an optical signal focused by a read/write optical head according to an embodiment of this application;

FIG. 16 is a schematic diagram of an adjustment direction determined based on a size and a shape of a spot when a servo control signal is used to adjust a position of a focus of an optical signal focused by a read/write optical head according to an embodiment of this application;

FIG. 17 is a schematic diagram of another adjustment direction determined based on a size and a shape of a spot when a servo control signal is used to adjust a position of a focus of an optical signal focused by a read/write optical head according to an embodiment of this application;

FIG. 18 is a schematic diagram of a data band including a plurality of data blocks according to an embodiment of this application; and

FIG. 19 is a schematic flowchart of a data read/write method according to an embodiment of this application.

## DESCRIPTION OF EMBODIMENTS

To better understand embodiments of this application, the following describes some terms or technologies used in embodiments of this application.

1. Optical deflector

An optical deflector is a device that deflects a propagation direction of an optical signal by using an optical deflection technology. The optical deflector is widely used in various devices, such as a laser scanning precision metering device, a laser machine device, and a laser pattern generator. Common optical deflection technologies include a mechanical deflection technology and a non-mechanical deflection technology.

In the mechanical deflection technology, an optical device such as a multi-faceted rotating mirror or a vibrating mirror is usually used to deflect a propagation direction of an optical signal. In the non-mechanical deflection technology, a refractive index of a transparent medium is changed through acousto-optic effect or electro-optical effect, so as to deflect a propagation direction of an optical signal.

A working principle of the optical deflector is briefly described by using an example in which the optical deflector is an acousto-optic deflector that deflects a propagation direction of an optical signal through acousto-optic effect. A sound wave is propagated in a transparent medium (for example, a crystal), and a refractive index of the transparent medium may be changed, so that a phase-type diffraction grating is formed on the transparent medium. When the optical signal passes through the diffraction grating, the propagation direction of the optical signal is deflected.

The acousto-optic deflector can deflect an angle range of the optical signal, proportional to a frequency change of the sound wave propagating in the transparent medium. Specifically, the angle range $\Delta \theta$ of the optical signal deflected by the acousto-optic deflector may be calculated by using the following Formula (1):

Formula (1) $$\Delta \theta = \frac{\lambda(f_2 - f_1)}{v}$$

$\lambda$ is a wavelength of the deflected optical signal, $f_1$ may be a start frequency of the sound wave propagated in the transparent medium, $f_2$ may be an end frequency of the sound wave propagated in the transparent medium, and $v$ is a propagation speed of the sound wave in the transparent medium.

The sound wave used to change the refractive index of the transparent medium in the acousto-optic deflector is usually obtained by performing electro-acoustic conversion on a radio frequency (Radio Frequency, RF) signal received by the acousto-optic deflector. In this way, frequencies of the RF signals input to the acousto-optic deflector are controlled, to obtain sound wave signals of different frequencies. Further, the sound wave signals of different frequencies are propagated in the transparent medium, so that the phase-type diffraction grating is formed on the transparent medium, and the propagation direction of the optical signal passing through the phase-type diffraction grating is deflected by different angles.

In practice, the RF signals input to the acousto-optic deflector are usually RF signals whose frequencies change continuously. Therefore, the frequencies of the sound wave signals obtained through electrical-optical conversion also change continuously. In this way, the optical signal can be continuously deflected when passing through the transparent medium on which the sound waves with continuously changing frequencies are acted.

It should be understood that, in the acousto-optic deflector, if the frequency of the sound wave propagated in the transparent medium changes from $f_1$ to $f_2$, or from $f_2$ to $f_1$, the optical signal may be deflected by the acousto-optic deflector by the angle range of $\Delta \theta$. In embodiments of this application, a time period required for changing the frequency of the sound wave propagated in the transparent medium from $f_1$ to $f_2$ (or from $f_2$ to $f_1$) is referred to as a preset period. It may also be understood that, in the preset period, the acousto-optic deflector may deflect the optical signal by the angle range $\Delta \theta$.

It should be understood that, in one preset period, the frequency of the sound wave changes unidirectionally, that is, changes from small to large, or changes from large to small. Therefore, in the preset period, the acousto-optic deflector deflects the optical signal in a unidirectional direction.

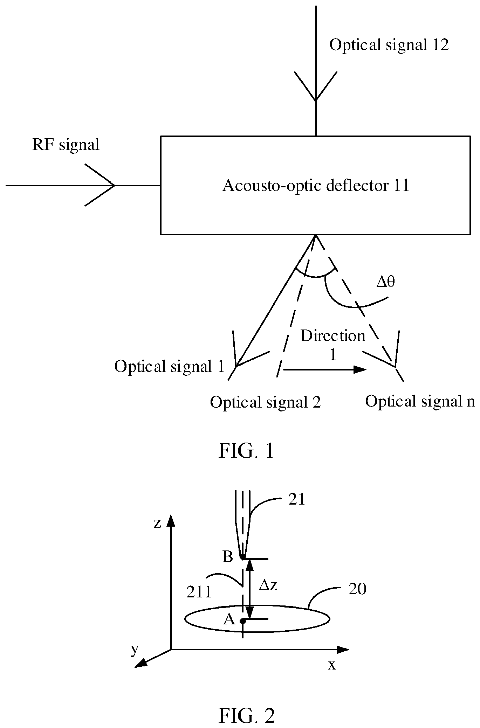

For example, FIG. 1 is a schematic diagram of deflecting an optical signal by an acousto-optical deflector. As shown in FIG. 1, an acousto-optic deflector 11 receives an RF signal whose frequency changes continuously, and converts the RF signal into a sound wave whose frequency changes continuously (for example, the frequency changes from $f_1$ to $f_2$). In this way, when the sound wave whose frequency changes continuously is propagated in a transparent medium in the acousto-optic deflector 11, an incident optical signal 12 received by the acousto-optic deflector 11 can be continuously deflected by an angle range $\triangle \theta$ (or in the foregoing preset period). Therefore, an emergent optical signal 1, optical signal 2, ..., and optical signal n are sequentially obtained.

In this case, the incident optical signal 12 is a continuous optical signal. For example, the optical signal 12 is deflected at a moment 1 to obtain the optical signal 1, the optical signal 12 is deflected at a moment 2 to obtain the optical signal 2, and the optical signal 12 is deflected at a moment n to obtain the optical signal n. Herein, the moment 1, the moment 2, ..., and the moment n are consecutive in the preset period. It can be seen that the acousto-optic deflector 11 deflects the optical signal 12 sequentially in a direction 1 shown in FIG. 1 to obtain optical signals with different emergent angles. Herein, the emergent angle is an included angle between an emergent optical signal and an incident optical signal.

Certainly, the incident optical signal 12 may alternatively be a pulse-type optical signal. In this case, if the acousto-optic deflector receives n (n is an integer greater than 1) optical pulse signals in a preset period T, the n optical pulse signals may be deflected sequentially by the acousto-optic deflector 11 in the preset period T in the direction 1 shown in FIG. 1, to obtain n optical signals with different emergent angles. A maximum included angle between the n optical signals with different emergent angles is less than or equal to $\triangle \theta$.

It can be seen that, the optical deflector that deflects the optical signal through the acousto-optic effect controls deflection of the propagation direction of the optical signal based on the frequency change of the RF signal, and is not limited by a mechanical rotating element. Therefore, the optical deflector has characteristics of fast deflection speed, no inertia, and small mechanical loss.

2. Focusing error

A focusing error may also be referred to as an axial error, or referred to as a defocus amount.

When a data read system reads, by using an optical signal, data stored in an optical storage medium, a read/write optical head usually needs to focus the optical signal on a storage layer 1, in the optical storage medium, used to store the data. This can read the data stored at the storage layer 1. In this case, in a direction of an optical axis of the optical signal, a distance between a focus of the optical signal focused by the read/write optical head and the storage layer 1 used to store the data is 0.

When the distance between the focus of the optical signal focused by the read/write optical head and the storage layer 1 used to store the data is not 0, that is, in the direction of the optical axis of the optical signal, there is a specific distance between the focus of the optical signal focused by the read/write optical head and the storage layer 1, in this case, the optical signal is not focused on the storage layer 1 used to store the data. Therefore, the distance between the focus of the optical signal focused by the read/write optical head and the storage layer 1 can be referred to as a focusing error of the data read system.

FIG. 2 is a schematic diagram of a focusing error in a data read system. As shown in FIG. 2, a storage layer 20 used to store data in an optical storage medium includes a data point A used to record data. A focus of an optical signal 21 that is used to read the data and is focused by a read/write optical head is a focus B, and an optical axis of the optical signal 21 is an optical axis 211. It can be seen that, in a direction of the optical axis 211, a distance between the focus B and the data point A is $\Delta z$. In other words, the focusing error in the data read system shown in FIG. 2 is $\Delta z$.

3. Tracking error

A tracking error may also be referred to as a radial error.

When a data read system reads, by using an optical signal, data stored in an optical storage medium, and a focusing error is 0 or is less than or equal to a preset threshold, the data stored in the optical storage medium can be read only when a data point used to record the data in the optical storage medium overlaps with a focus of the optical signal that is used to read the data and is focused by a read/write optical head in a radial direction. The radial direction herein refers to a direction perpendicular to an optical axis of the optical signal used to read the data. A specific value of the preset threshold herein is not limited in embodiments of this application.

When the focus of the optical signal that is used to read the data and is focused by the optical head does not overlap with the data point in the optical storage medium in the radial direction, that is, there is a specific offset between the focus of the optical signal focused by the read/write optical head and the data point in the optical storage medium in the radial direction, in this case, the offset may be referred to as a tracking error of the data read system.

It should be understood that, on a two-dimensional plane of the radial direction, a radial offset may include an x-axis offset and a y-axis offset.

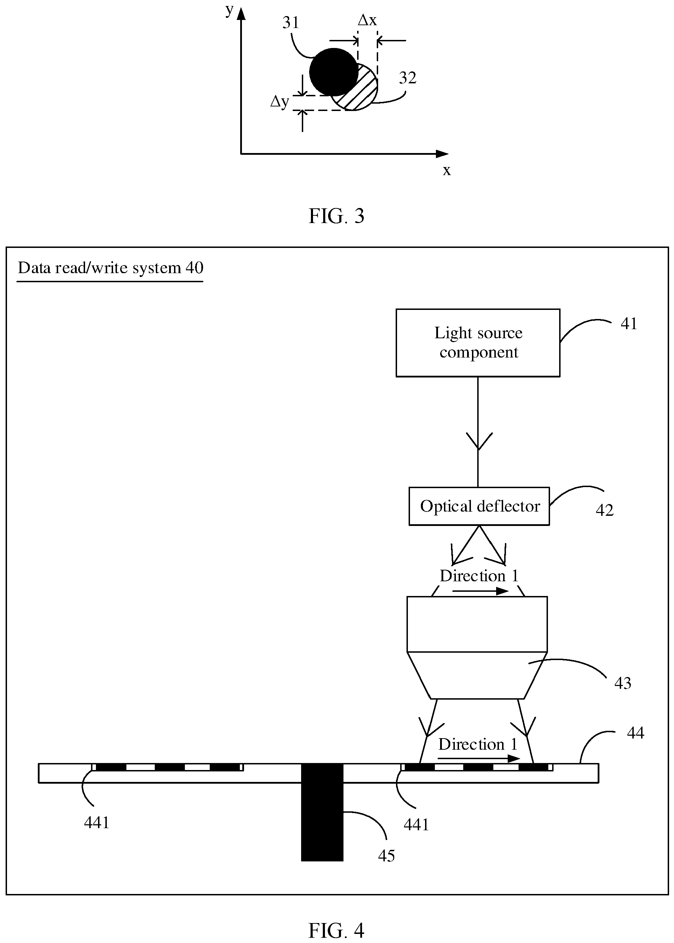

FIG. 3 is a schematic diagram of a tracking error in a data read system. As shown in FIG. 3, a two-dimensional plane formed by an x-axis and a y-axis is a plane perpendicular to an optical axis of an optical signal used to read data. A focus of the optical signal focused by a read/write optical head is a focus 31. An optical storage medium includes a data point 32 used to record the data.

It can be seen that a radial offset between the focus 31 and the data point 32 includes an x-axis offset Δx and a y-axis offset Δy. Δx represents a distance between the focus 31 and the data point 32 in an x-axis direction, and Δy represents a distance between the focus 31 and the data point 32 in a y-axis direction.

(4) Other terms

In embodiments of this application, the words "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly indicate or implicitly include one or more such features. In the descriptions of this application, unless otherwise specified, "a plurality of" means two or more than two.

In this application, the term "at least one" means one or more, and in this application, the term "a plurality of" means two or more. For example, a plurality of second packets mean two or more second packets. Terms "system" and "network" may be used interchangeably in this specification.

It should be understood that the terms used in the descriptions of various examples in this specification are merely intended to describe specific examples, but are not intended to constitute a limitation. The terms "one" ("a" and "an") and "the" of singular forms used in the descriptions of various examples and the appended claims are also intended to include plural forms, unless otherwise specified in the context clearly.

It should be further understood that, the term "and/or" used in this specification indicates and includes any or all possible combinations of one or more items in associated listed items. The term "and/or" describes an association relationship between associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

It should be understood that determining B based on A does not mean that B is determined based on only A, and B may alternatively be determined based on A and/or other information.

It should be further understood that the term "include" (or referred to as "includes", "including", "comprises", and/or "comprising"), when being used in this specification, specifies the presence of stated features, integers, steps, operations, elements, and/or components, but do not preclude the presence or addition of one or more other features, integers, steps, operations, elements, components, and/or groups thereof.

It should be further understood that the term "if" may be interpreted as a meaning "when" ("when" or "upon"), "in response to determining", or "in response to detecting". Similarly, according to the context, the phrase "if it is determined that" or "if (a stated condition or event) is detected" may be interpreted as a meaning of "when it is determined that", "in response to determining", "when (a stated condition or event) is detected", or "in response to detecting (a stated condition or event)".

It should be understood that "one embodiment", "an embodiment", and "a possible implementation" mentioned in the entire specification mean that particular features, structures, or characteristics related to an embodiment or the implementations are included in at least one embodiment of this application. Therefore, "in one embodiment", "in an embodiment", or "in a possible implementation" appearing in this specification does not necessarily mean a same embodiment. In addition, these particular features, structures, or characteristics may be combined in one or more embodiments by using any appropriate manner.

Embodiments of this application provide a data read/write system. The data read/write system deflects an optical signal and moves an optical storage medium, so that a plurality of data channels can be read/written at the same time. This can improve a data read/write speed without increasing a moving speed of the optical storage medium.

The data read/write system is described below by using an example in which the data read/write system is configured to write data.

FIG. 4 is a schematic diagram of a structure of a data read/write system 40 according to an embodiment of this application. As shown in FIG. 4, the data read/write system 40 includes a light source component 41, an optical deflector 42, and a read/write optical head 43.

The light source component 41 is configured to generate an initial optical signal, where the initial optical signal is a pulse-type optical signal, for example, may be a high-frequency pulse laser signal.

An optical pulse signal in the initial optical signal is an optical pulse signal having a first preset power. In this way, the optical pulse signal in the initial optical signal acts on an optical storage medium 44 after passing through the optical deflector 42 and the read/write optical head 43, to generate physical and/or chemical properties corresponding to to-be-written data, and implement writing of the to-be-written data. It should be understood that first preset powers one-to-one correspond to physical and/or chemical properties presented by the optical storage medium 44. Herein, a specific value of the first preset power is not limited in this embodiment of this application.

The to-be-written data may be encoded data obtained after to-be-stored data is encoded. For example, the to-be-written data may be binary data obtained after the to-be-stored data is encoded, or the to-be-written data may be decimal data obtained after the to-be-stored data is encoded. This is not limited thereto.

It should be understood that, if the to-be-written data is the binary data, the optical storage medium 44 needs to present two physical and/or chemical properties after being acted on by the optical signal. In this way, the first preset power includes two different preset powers, and the two different preset powers one-to-one correspond to the two physical and/or chemical properties.

For example, when the to-be-written data is a binary number, the physical and/or chemical properties of the optical storage medium 44 need to present two states. In this way, a state 1 of the optical storage medium 44 may represent "0", and a state 2 of the optical storage medium 44 may represent "1"; or a state 1 of the optical storage medium 44 may represent "1", and a state 2 of the optical storage medium 44 may represent "0". In this case, the optical signal having the first preset power includes optical signals having two preset powers. An optical signal having a preset power 1 may be used to generate the state 1 on the optical storage medium 44, so as to implement writing of "0", and an optical signal having a preset power 2 may be used to generate the state on the optical storage medium 44, so as to implement writing of "1".

Similarly, if the to-be-written data is the decimal data, the optical storage medium 44 needs to present 10 physical and/or chemical properties after being acted on by the optical signal. In this way, the first preset power includes 10 different preset powers, and the 10 different preset powers one-to-one correspond to the 10 physical and/or chemical properties. Details are not described again.

When the optical storage medium 44 records data in a reflected light manner, different physical and/or chemical properties generated by the optical storage medium 44 may enable the optical storage medium 44 to have different reflectivities (reflectivities). When the optical storage medium 44 records data in a spontaneous fluorescence manner, different physical and/or chemical properties generated by the optical storage medium 44 may enable the optical storage medium 44 to have different fluorescence radiance.

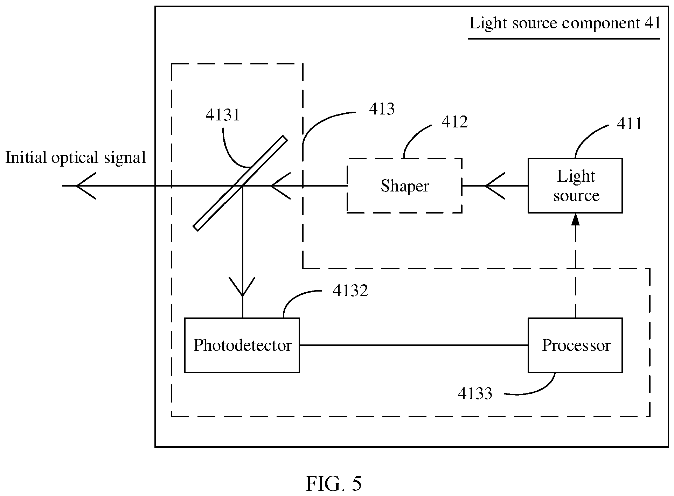

Specifically, FIG. 5 is a schematic diagram of a structure of the light source component 41. As shown in FIG. 5, the light source component 41 includes a light source 411. Optionally, the light source component 41 may further include a shaper 412 and an optical power adjustment module 413.

The light source 411 is used to generate an original optical signal, where the original optical signal is a pulse-type optical signal, for example, a high-frequency pulse laser signal.

Optionally, the light source 411 may be a laser generator, for example, may be a diode laser generator, and certainly is not limited thereto.

A power of each optical pulse signal in the original optical signal generated by the light source 411 is obtained by the light source 411 in advance. Herein, if the optical pulse signal in the original optical signal is used to write the to-be-written data, a power of the optical pulse signal pre-obtained by the light source 411 is the first preset power predetermined based on the to-be-written data. If the optical pulse signal in the original optical signal is used to write a servo point, a power of the optical pulse signal pre-obtained by the light source 411 is a second preset power. Herein, a specific value of the second preset power is not limited in this embodiment of this application.

The servo point is used to adjust, during data reading, a position of a focus of an optical signal focused by the read/write optical head 43. The second preset power of the optical pulse signal used to write each servo point may be the same or different. This is not limited.

It should be understood that, if the second preset power of the optical pulse signal used to write each servo point is the same, after the data read/write system 40 writes the servo point on the optical storage medium 44, an area used to represent each servo point on the optical storage medium 44 has the same physical and/or chemical properties. If the second preset power of the optical pulse signal used to write each servo point is different, after the data read/write system 40 writes the servo point on the optical storage medium 44, an area used to represent each servo point on the optical storage medium 44 has different physical and/or chemical properties. For brief description, in this embodiment of this application, descriptions are provided by using an example in which the second preset power of the optical pulse signal used to write each servo point is the same.

It should be noted that the second preset power of the optical pulse signal used to write the servo point is different from the first preset power of the optical pulse signal used to write the to-be-written data.

Optionally, the original optical signal is the initial optical signal.

The shaper 412 is configured to modulate a shape of an original optical signal generated by the light source 411.

For example, the shaper 412 may be a beam expander, configured to expand a beam of an original optical signal generated by the light source 411.

For another example, the shaper 412 may be a collimator, configured to collimate an original optical signal generated by the light source 411.

Optionally, when a loss in an optical path is not considered, an optical signal output after the original optical signal is shaped by the shaper 412 is the initial optical signal.

The optical power adjustment module 413 is configured to: monitor whether an actual output power of each optical pulse signal in the original optical signal generated by the light source 411 meets a rating requirement, and when the actual output power of the optical pulse signal in the original optical signal generated by the light source 411 does not meet the rating requirement, adjust a parameter of the light source 411, so that an actual output power of a next optical pulse signal generated by the light source 411 meets the rating requirement.

Herein, whether the actual output power of each optical pulse signal in the original optical signal generated by the light source 411 meets the rating requirement refers to whether a difference between a power of the optical pulse signal obtained by the light source 411 in advance and a power of the optical pulse signal actually output by the light source 411 based on the power is less than or equal to a first preset threshold. When the difference is less than the first preset threshold, it indicates that the actual output power of the optical pulse signal output by the light source 411 meets the rating requirement. When the difference is greater than the first preset threshold, it indicates that the actual output power of the optical pulse signal output by the light source 411 does not meet the rating requirement. A specific value of the first preset threshold is not limited in this embodiment of this application.

Herein, a case in which the difference is equal to the first preset threshold is not limited in this embodiment of this application. For example, in this embodiment of this application, it may be determined that, when the difference is equal to the first preset threshold, the actual output power of each optical pulse signal in the original optical signal generated by the light source 411 meets the rating requirement. Certainly, in this embodiment of this application, it may alternatively be determined that, when the difference is equal to the first preset threshold, the actual output power of each optical pulse signal in the original optical signal generated by the light source 411 does not meet the rating requirement.

Specifically, the optical power adjustment module 413 may include a beam splitter 4131, a photodetector 4132, and a processor 4133.

The beam splitter 4131 may be configured to split an original optical signal received from the light source 411 into two optical signal beams (for example, a first original optical signal and a second original optical signal); or the beam splitter 4131 may be configured to split an optical signal received from the shape module 412 into a first original optical signal and a second original optical signal.

Herein, for example, the beam splitter 4131 may be a semi-transmissive semi-reverse light-splitting prism or a light-splitting lens, or the beam splitter 4131 may be a light-splitting prism or a light-splitting lens with a preset split ratio. This is not limited.

The split ratio may be a ratio of a transmitted optical signal to a reflected optical signal by the beam splitter 4131. For example, the beam splitter 4131 is a beam splitter with a split ratio of 95:5. The beam splitter 4131 may transmit 95% of the incident optical signal, and reflect 5% of the incident optical signal.

The first original optical signal may be an optical signal transmitted by the beam splitter 4131, or may be an optical signal reflected by the beam splitter 4131. This is not limited. If the first original optical signal is the optical signal transmitted by the beam splitter 4131, the second original optical signal is the optical signal reflected by the beam splitter 4131. If the first original optical signal is the optical signal reflected by the beam splitter 4131, the second original optical signal is the optical signal transmitted by the beam splitter 4131.

As shown in FIG. 5, for example, the first original optical signal is the optical signal transmitted by the beam splitter 4131, and the second original optical signal is the optical signal reflected by the beam splitter 4131. In this case, the first original optical signal is the initial optical signal output by the light source component 41, the second original optical signal is reflected to the photodetector 4132, and is used to determine whether the actual output power of each optical pulse signal in the original optical signal generated by the light source 411 meets the rating requirement.

The photodetector 4132 is configured to receive the second original optical signal reflected by the beam splitter 4131, and convert an optical pulse signal in the second original optical signal into an electrical signal, so as to obtain light intensity information of the optical pulse signal in the second original optical signal. Then, the photodetector 4132 sends the detected light intensity information to the processor 4133.

Optionally, the photodetector 4132 may be a photoelectric sensor, for example, a charge coupled device (charge coupled device, CCD). This is not limited.

The processor 4133 is configured to: receive the light intensity information sent by the photodetector 4132, and determine, based on the light intensity information, the actual output power of the optical pulse signal in the original optical signal generated by the light source 411. Then, the processor 4133 may determine, based on the determined actual output power, whether the actual output power meets the rating requirement.

When determining that the actual output power does not meet the rating requirement, the processor 4133 generates a power adjustment signal based on the actual output power and the power, of the optical pulse signal, pre-obtained by the light source 411. Specifically, the processor 4133 may generate the power adjustment signal based on the difference between the actual output power and the power, of the optical pulse signal, pre-obtained by the light source 411.

Then, the processor 4133 may send the power adjustment signal to the light source 411. In this way, the light source 411 can adjust the parameter of the light source 411 based on the power adjustment signal, so that the output power of the next optical pulse signal generated by the light source 411 meets the rating requirement.

It should be noted that, if the light source component 41 includes the optical power adjustment module 413, when the light source 411 generates the original optical signal, if the optical pulse signal in the original optical signal is used to write the to-be-written data, the optical pulse signal power pre-obtained by the light source 411 is greater than the first preset power. If the optical pulse signal in the original optical signal is used to write into the servo point, the power of the optical pulse signal pre-obtained by the light source 411 is greater than the second preset power. This is because the beam splitter 4131 in the optical power module 413 needs to split a part of the optical pulse signal generated by the light source 411, so as to determine whether the actual output power of the optical pulse signal in the original optical signal generated by the light source 411 meets the rating requirement. Details are not described herein again.

Still refer to FIG. 4. The optical deflector 42 is configured to receive a first optical signal and deflect the first optical signal.

In a possible implementation, as shown in FIG. 4, the optical deflector 42 may receive the initial optical signal generated by the light source component 41 that has a same optical axis as the optical deflector 42. In this case, there is no other optical device between the optical deflector 42 and the light source component 41. In other words, the initial optical signal generated by the light source component 41 is the first optical signal.

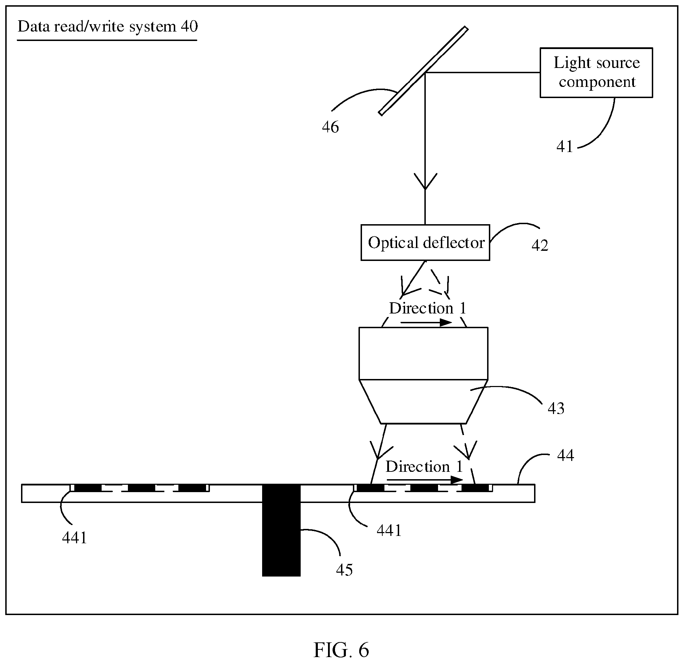

In another possible implementation, as shown in FIG. 6, the deflector 42 may receive the initial optical signal generated by the light source component 41 that has a different optical axis from the optical deflector 42.

In this case, the data read/write system 40 may further include a reflector 46. The reflector 46 is configured to reflect the initial optical signal generated by the light source component 41 to the optical deflector 42. In this way, the optical deflector 42 can receive the initial optical signal that is generated by the light source component 41 and is reflected by the reflector 46. In this case, an optical signal obtained after the initial optical signal generated by the light source component 41 is reflected by the reflector 46 is the first optical signal.

It can be seen that, in this case, the reflector 46 deflects a propagation direction of the initial optical signal. For example, as shown in FIG. 6, the reflector 46 deflects the propagation direction of the initial optical signal by 90°.

It should be noted that, because the initial optical signal is the pulse-type optical signal, the first optical signal is also a pulse-type optical signal.

Optionally, the reflector 46 may be a flat reflector, or may be a prism reflector. This is not limited.

It should be noted that a disposing position of the reflector 46 shown in FIG. 6 is merely an example for description, and is not limited thereto.

It should be understood that the optical deflector 42 may be any type of optical deflector. Herein, for related descriptions of the optical deflector, refer to the foregoing descriptions. Details are not described herein again. For ease of description, in this embodiment of this application, descriptions are provided by using an example in which the optical deflector 42 is an acousto-optic deflector.

Specifically, based on the foregoing descriptions related to the acousto-optic deflector, it can be learned that the optical deflector 42 may sequentially deflect the first optical signal received in the preset period by a plurality of angles, to obtain a plurality of second optical signals. The plurality of angles one-to-one correspond to the plurality of second optical signals. The plurality of angles are emergent angles of the plurality of second optical signals, and the emergent angles may be included angles between the plurality of second optical signals and the first optical signal. This is not limited. For descriptions related to the preset period, refer to the foregoing descriptions of the preset period. Details are not described herein again.

It should be noted herein that, because the first optical signal is the pulse-type optical signal, the plurality of second optical signals are optical signals obtained after a plurality of optical pulse signals in the first optical signal are sequentially deflected by the optical deflector 42 in the preset period.

It should be understood that the optical deflector 42 in this embodiment of this application may generally deflect an optical signal in a one-dimensional plane. Therefore, the plurality of second optical signals obtained after the optical deflector 42 deflects the first optical signal are in one plane.

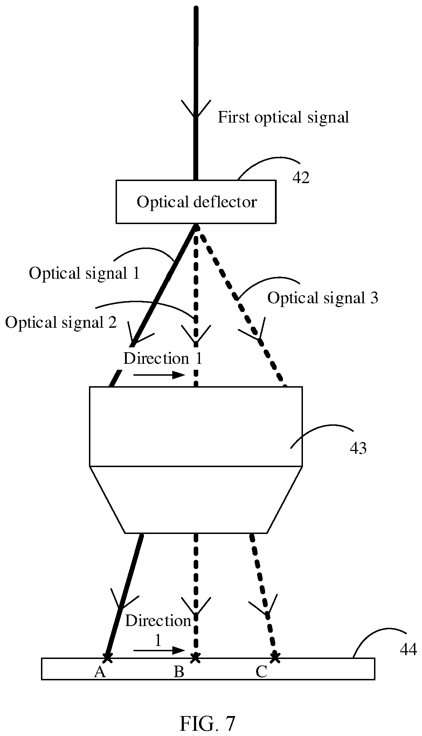

For example, FIG. 7 is a schematic diagram of sequentially deflecting, by the optical deflector 42, in a direction 1, three optical pulse signals in the first optical signal received in the preset period by different angles. As shown in FIG. 7, the optical deflector 42 may receive an optical pulse signal 1 in the first optical signal at a moment 1, and deflect the optical pulse signal 1 by an angle 1 to obtain an optical signal 1. Similarly, the optical deflector 42 may receive an optical pulse signal 2 in the first optical signal at a moment 2, and deflect the optical pulse signal 2 by an angle 2 to obtain an optical signal 2. The optical deflector 42 may receive an optical pulse signal 3 in the first optical signal at a moment 3, and deflect the optical pulse signal 3 by an angle 3 to obtain an optical signal 3. The optical signal 1, the optical signal 2, and the optical signal 3 are three second optical signals.

The angle 1 may be an included angle between the optical pulse signal 1 in the first optical signal and the optical signal 1, and the angle 2 may be an included angle between the optical pulse signal 2 in the first optical signal and the optical signal 2, the angle 3 may be an included angle between the optical pulse signal 3 in the first optical signal and the optical signal 3.

It should be understood that an included angle between the optical signal 1 and the optical signal 3 is less than or equal to an angle range (for example, the foregoing $\triangle \theta$) that can be deflected when the acousto-optic deflector 42 deflects the optical signal.

The read/write optical head 43 is configured to sequentially focus the received plurality of second optical signals on the optical storage medium 44, so as to implement writing of a plurality of data points.

It should be understood that, because the plurality of second optical signals are located in one plane, the plurality of second optical signals are focused by the read/write optical head 43 on a plurality of data points written into the optical storage medium 44, and the data points are arranged linearly.

The read/write optical head 43 may be any optical device having a focus function, for example, a lens or an objective lens. This is not limited. Herein, the lens may be any lens such as a single lens, a combination lens, or a small spherical lens, and is not limited thereto.

For example, as shown in FIG. 7, after receiving the optical signal 1, the read/write optical head 43 may focus the optical signal 1 on a point A on the optical storage medium 44, so as to implement writing of a data point A. Similarly, after receiving the optical signal 2, the read/write optical head 43 may focus the optical signal 2 on a point B on the optical storage medium 44, so as to implement writing of a data point B. After receiving the optical signal 3, the read/write optical head 43 may focus the optical signal 3 on a point C on the optical storage medium 44, so as to implement writing of a data point C. It can be learned that the read/write optical head 43 sequentially writes the data point A, the data point B, and the data point C into the optical storage medium 44 at different moments in the direction 1. It can be seen that the data point A, the data point B, and the data point C are arranged linearly.

In a possible implementation, if the optical storage medium 44 is stationary, the data points written by the read/write optical head 43 into the optical storage medium 44 are linearly arranged in a direction in which the optical deflector 42 deflects the first optical signal.

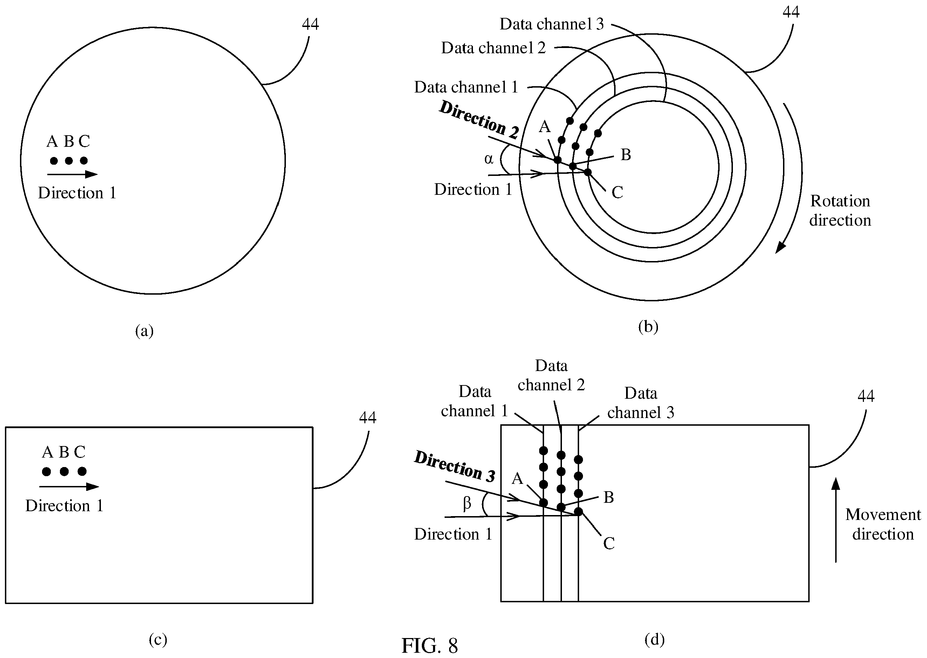

For example, as shown in (a) in FIG. 8, the data point A, the data point B, and the data point C written by the read/write optical head 43 into the circular optical storage medium 44 are arranged linearly in a direction (the direction 1) in which the optical deflector 42 deflects the first optical signal.

As shown in (c) in FIG. 8, the data point A, the data point B, and the data point C written by the read/write optical head 43 into the rectangular optical storage medium 44 are arranged linearly in a direction (the direction 1) in which the optical deflector 42 deflects the first optical signal.

In another possible implementation, if the optical storage medium 44 is in a moving state, the data points written by the read/write optical head 43 into the optical storage medium 44 are linearly arranged in a direction that has a preset included angle with a direction in which the optical deflector 42 deflects the first optical signal. Herein, the preset angle is proportional to a moving speed of the optical storage medium 44.

In this case, the data read/write system 40 may further include a first mobile platform 45. The first mobile platform 45 is configured to control the optical storage medium 44 to rotate or translate on a plane perpendicular to an axial direction of the read/write optical head 43. The axial direction of the read/write optical head 43 refers to a direction of an optical axis of the read/write optical head 43. For brief description, in this embodiment of this application, "an axial direction of the read/write optical head 43" is abbreviated as "an axial direction".

When the first mobile platform 45 is configured to control the optical storage medium 44 to rotate on the plane perpendicular to the axial direction, the first mobile platform 45 may be a rotating platform. When the first mobile platform 45 is configured to control the optical storage medium 44 to translate on the plane perpendicular to the axial direction, the first mobile platform 45 may be a one-dimensional or multi-dimensional direct mobile platform. This is not limited.

For example, as shown in (b) in FIG. 8, when the first mobile platform 45 controls the circular optical storage medium 44 to rotate in a rotation direction shown in (b) in FIG. 8, the data point A, the data point B, and the data point C written by the read/write optical head 43 into the optical storage medium 44 are sequentially linearly arranged in a direction 2 that has a preset included angle $\alpha$ with a direction 1 in which the optical deflector 42 deflects the first optical signal.

As shown in (d) in FIG. 8, when the first mobile platform 45 controls the rectangular optical storage medium 44 to translate in a movement direction shown in (b) in FIG. 8, the data point A, the data point B, and the data point C written by the read/write optical head 43 into the optical storage medium 44 are sequentially linearly arranged in a direction 3 that has a preset included angle $\beta$ with a direction 1 in which the optical deflector 42 deflects the first optical signal.

In this way, in a continuous moving process of the optical storage medium 44, the read/write optical head 43 can receive a plurality of second optical signals in each of a plurality of preset periods, and sequentially focus the plurality of second optical signals on the optical storage medium 44, to implement writing of a plurality of data channels.

A quantity of the plurality of data channels corresponds to a quantity of the plurality of second optical signals obtained by deflecting the first optical signal by the read/write optical head 43 in the preset period, that is, a quantity of the plurality of data channels corresponds to a quantity of the plurality of data points written into the optical storage medium by sequentially focusing the plurality of second optical signals on the optical storage medium 44 by the read/write optical head 43. In addition, the plurality of data channels include the plurality of data points, and each of the plurality of data channels passes through one of the plurality of data points, that is, the plurality of data channels one-to-one correspond to the plurality of data points.

In this case, the plurality of data channels may form one data band. In this way, a single optical signal beam (namely, the initial optical signal) generated by the light source component 41 can be written into a plurality of data channels in parallel on the optical storage medium 44 through an optical path of the data read/write system 40. This can improve data read/write efficiency.

For example, as shown in (b) in FIG. 8, when the first mobile platform 45 controls the circular optical storage medium 44 to rotate in the rotation direction shown in (b) in FIG. 8, data points written by the read/write optical head 43 in a preset period include the data point A, the data point B, and the data point C. In this case, the read/write optical head 43 can write three data channels (including a data channel 1, a data channel 2, and a data channel 3) into the optical storage medium 44 in a plurality of preset periods. The data channel 1 passes through the data point A, the data channel 2 passes through the data point B, and the data channel 3 passes through the data point C. Herein, the three data channels may form a ring data band, for example, a data band 441 shown in FIG. 4 or FIG. 6. It should be understood that the data band 441 shown in FIG. 4 or FIG. 6 is a sectional view of the data band.

As shown in (d) in FIG. 8, when the first mobile platform 45 controls the rectangular optical storage medium 44 to translate in the movement direction shown in (b) in FIG. 8, data points written by the read/write optical head 43 in a preset period include the data point A, the data point B, and the data point C. In this case, the read/write optical head 43 can write three data channels (including a data channel 1, a data channel 2, and a data channel 3) into the optical storage medium 44 in a plurality of preset periods. The data channel 1 passes through the data point A, the data channel 2 passes through the data point B, and the data channel 3 passes through the data point C. Herein, the three data channels may form a rectangular data band.

It should be understood that a quantity of data points on each of the plurality of data channels is the same as a quantity of preset periods required by the read/write optical head 43 to write the plurality of data channels into the optical storage medium 44.

For example, if the read/write optical head 43 writes the plurality of data channels into the optical storage medium 44 within m preset periods, there are m data points on each of the plurality of data channels. Herein, m is a positive integer.

It should be understood that, if the optical storage medium 44 is an optical storage medium including a plurality of storage layers, the first mobile platform 45 may be configured to control the optical storage medium 44 to move in the axial direction, so that the read/write optical head 43 focuses a plurality of second optical signals at different storage layers of the optical storage medium 44, thereby writing the data band at each storage layer.

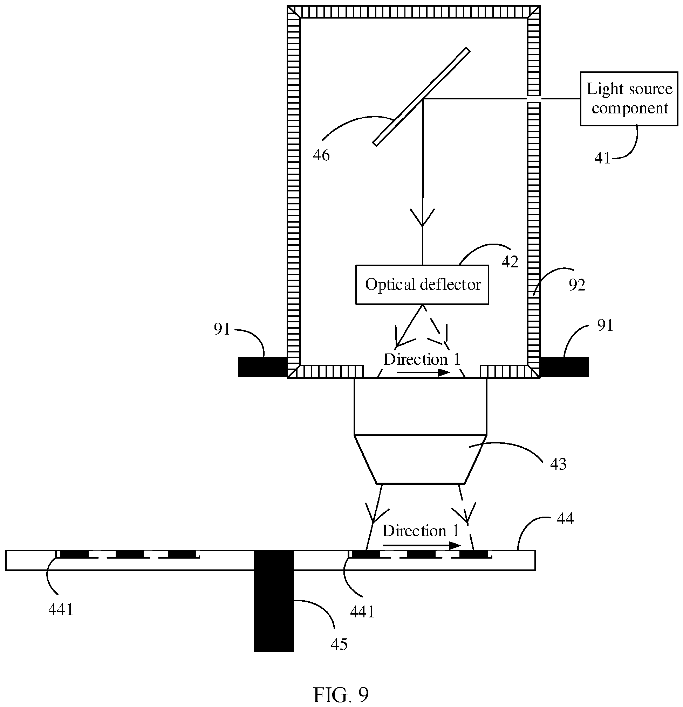

Optionally, with reference to FIG. 5, refer to FIG. 9. The data read/write system 40 may further include a radial mobile station 91. The radial mobile station 91 is disposed on a primary support 92, and the optical deflector 42, the reflector 46, and the read/write optical head 43 may also be disposed on the primary support 92 by using components such as an optical lens frame. In this way, the radial mobile station 91 can be configured to: after the read/write optical head 43 completes writing of a first data band at a first storage layer of the plurality of storage layers of the optical storage medium 44, on a plane perpendicular to the axial direction, move the optical deflector 42, the reflector 46, and the read/write optical head 43 by a first preset distance, to write a second data band at the first storage layer.

The first preset distance is greater than a width of the first data band. A value of the first preset distance is not specifically limited in this embodiment of this application.

The first data band and the second data band may be two adjacent data bands or two non-adjacent data bands. This is not limited.

It should be understood that, if the light source component 41 and the read/write optical head 43 in the data read/write system 40 share an optical axis, the light source component 41 may also be disposed on the primary support 92. In this way, the radial mobile station 91 can be configured to: after the read/write optical head 43 completes writing of the first data band at the first storage layer of the plurality of storage layers of the optical storage medium 44, on the plane perpendicular to the axial direction, move the light source component 41, the optical deflector 42, the reflector 46, and the read/write optical head 43 by the first preset distance, to write the second data band at the first storage layer.

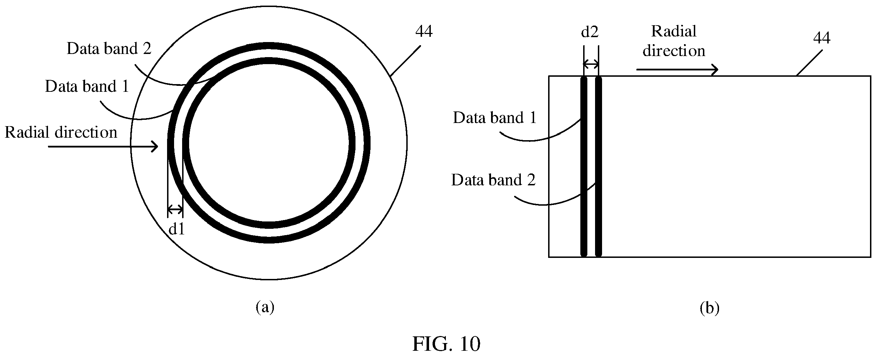

For example, FIG. 10 is a schematic diagram of writing different data bands by the data read/write system 40 by controlling the radial mobile station 91 to move the preset distance.

As shown in (a) in FIG. 10, after writing a ring data band 1 into the optical storage medium 44, the data read/write system 40 may control the radial mobile station 91 to move the preset distance d1 in a direction (namely, the radial direction) perpendicular to the axis direction, to implement writing of a ring data band 2, where d1 is greater than or equal to a width of the data band 1.

As shown in (b) in FIG. 10, after writing a rectangular data band 1 into the optical storage medium 44, the data read/write system 40 may control the radial mobile station 91 to move the preset distance d2 in a direction (namely, the radial direction) perpendicular to the axis direction, to implement writing of a rectangular data band 2, where d2 is greater than or equal to a width of the data band 1.

It should be understood that, a data band that is written by the data read/write system 40 into the optical storage medium 44 by using the read/write optical head 43 includes a data point used to store data and a data point used as a servo point. Herein, the servo point is used to adjust a position of a focus of an optical signal focused by the read/write optical head 43. In this embodiment of this application, a data channel including the servo point is referred to as a servo channel.

One data band may include at least one servo channel. Any one of the at least one servo channel includes a plurality of servo points. For brief description, in the following description of this embodiment of this application, an example in which one data band includes one servo channel is used for description.

In one aspect, for a plurality of servo points on a servo channel in any data band in the optical storage medium 44, the plurality of servo points may be continuously distributed on the servo channel, or may be discretely distributed on the servo channel, this is not limited.

If the plurality of servo points are discretely distributed on the servo channel, the plurality of servo points may be evenly distributed on the servo channel at intervals of a second preset distance. Certainly, the plurality of servo points may also be randomly and discretely distributed on the servo channel. This is not limited. A distance between any two adjacent servo points in the plurality of servo points is less than or equal to a second preset threshold. Values of the second preset distance and the second preset threshold are not specifically limited in this embodiment of this application.

In another aspect, for the optical storage medium 44 including the plurality of storage layers, servo points at each of the plurality of storage layers are discretely distributed in the axial direction. For ease of description, descriptions are provided below by using an example in which the optical storage medium 44 includes p (p is an integer greater than 1) storage layers.

In a first possible implementation, at the p storage layers included in the optical storage medium 44, servo channels in data bands overlapping in the axial direction at each storage layer overlap in the axial direction. In addition, for a first storage layer and a second storage layer that are separated by q (q is a positive integer greater than 1) storage layers in the p storage layers, if a first servo channel at the first storage layer overlaps with a second servo channel at the second storage layer in the axial direction, a straight line that passes through any servo point on the first servo channel and is parallel to the axial direction also passes through a servo point on the second servo channel. The first servo channel is any servo channel at the first storage layer, and the second servo channel is a servo channel that is at the second storage layer and overlaps with the first servo channel in the axial direction.

If either of the first storage layer and the second storage layer is a third storage layer, and a third servo channel at the third storage layer overlaps with the first servo channel at the first storage layer (or the second servo channel at the second storage layer) in the axial direction, a straight line that passes through any servo point on the third servo channel and is parallel to the axial direction does not pass through the first storage layer, the second storage layer, and a servo point at any storage layer except the third storage layer between the first storage layer and the second storage layer. This indicates that servo points on each storage layer before the first storage layer and the second storage layer do not overlap in the axial direction.

In this way, for the p storage layers, servo points at the p storage layers are discretely distributed at intervals of q storage layers in the axial direction, and servo points on any servo channel at each storage layer are discretely distributed.

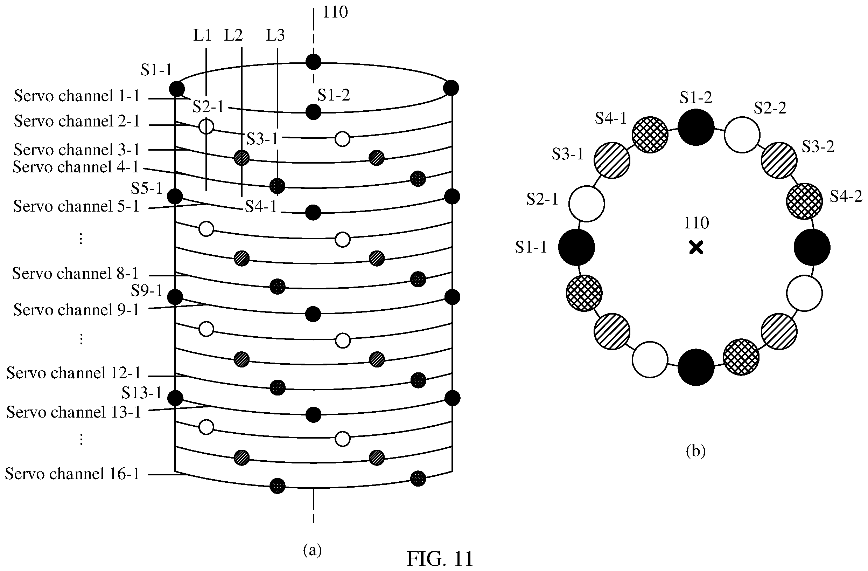

For example, FIG. 11 is a schematic diagram of servo points discretely distributed on circular servo channels overlapping in the axial direction. (a) in FIG. 11 shows a front view of 16 circular servo channels overlapping in the axial direction. As shown in (a) in FIG. 11, the 16 servo channels overlapping in the axial direction include a servo channel 1-1 at a storage layer 1, a servo channel 2-1 at a storage layer 2, a servo channel 3-1 at a storage layer 3, a servo channel 4-1 at a storage layer 4, a servo channel 5-1 at a storage layer 5, ..., and a servo channel 16-1 at a storage layer 16.

As shown in (a) in FIG. 11, the servo channel 1-1 (namely, the foregoing first servo channel) and the servo channel 5-1 (namely, the foregoing second servo channel) are separated by three storage layers (which are respectively the storage layer 2, the storage layer 3, and the storage layer 4). A servo point s1-1 on the servo channel 1-1 overlaps with a servo point s5-1 on the servo channel 5-1 in the axial direction. A straight line L1 that passes through a servo point s2-1 on the servo channel 2-1 and is parallel to the axial direction, a straight line L2 that passes through a servo point s3-1 on the servo channel 3-1 and is parallel to the axial direction, and a straight line L3 that passes through a servo point s4-1 on the servo channel 4-1 and is parallel to the axial direction do not pass through any one servo point on the storage layer 1, the storage layer 2, the storage layer 3, and the storage layer 4. In other words, servo points at each between the storage layer 1 and the storage layer 4 do not overlap in the axial direction. The axial direction is a direction shown by an optical axis 110 in FIG. 11.

(b) in FIG. 11 shows a top view of the 16 circular servo channels overlapping in the axial direction shown in (a) in FIG. 11. As shown in (b) in FIG. 11, the servo point s1-1 and a servo point s1-2 are servo points on the servo channel 1-1 at the storage layer 1. The servo point s2-1 and a servo point 2-2 are servo points on the servo channel 2-1 at the storage layer 2. The servo point s3-1 and a servo point 3-2 are servo points on the servo channel 3-1 at the storage layer 3. The servo point s4-1 and a servo point 4-2 are servo points on the servo channel 4-1 at the storage layer 4.

It can be seen that the servo point s1-1, the servo point s2-1, the servo point s3-1, and the servo point s4-1 do not overlap in an axial direction. The servo point s1-1 and the servo point s1-2 on the servo channel 1-1 are discretely distributed at an interval of three data points in the radial direction. The servo point s2-1 and the servo point s2-2 on the servo channel 2-1 are discretely distributed at an interval of three data points in the radial direction. The servo point s3-1 and the servo point s3-2 on the servo channel 3-1 are discretely distributed at an interval of three data points in the radial direction. The servo point s4-1 and the servo point s4-2 on the servo channel 4-1 are discretely distributed at an interval of three data points in the radial direction. Herein, the radial direction is a direction perpendicular to the axial direction.

Similarly, the servo point s5-1 on the servo channel 5-1 overlaps with a servo point s9-1 on a servo channel 9-1 in the axial direction, and servo points at each between the storage layer 5 and a storage layer 8 do not overlap in the axial direction. The servo point s9-1 on the servo channel 9-1 overlaps with a servo point s13-1 on a servo channel 13-1 in the axial direction, and servo points at each between the storage layer 9 and a storage layer 12 do not overlap in the axial direction. Servo points on each between a storage layer 13 and the storage layer 16 do not overlap in the axial direction. In this way, for the 16 storage layers, servo points on servo channels overlapping in the axial direction at the 16 storage layers are discretely distributed at intervals of three storage layers in the axial direction.

It should be understood that, for any one of the p servo channels overlapping in the axial direction at the p storage layers, positions of data points between discretely distributed servo points on the servo channel is empty, that is, no content is written to these positions. In this way, when the data read/write system 40 reads data and an optical signal used to read the data acts on a servo point at the storage layer far away from a surface of the optical storage medium 44, attenuation of the optical signal can be effectively reduced, so that the data read/write system 40 can accurately read the servo point at the storage layer far away from the surface of the optical storage medium 44. This can effectively improve servo efficiency of the data read/write system 40.

For example, as shown in (a) in FIG. 11, when the optical signal used to read the data acts on the servo point s13-1 at the storage layer 13 after passing through the storage layer 1 to the storage layer 12, in this case, attenuation of an optical power occurs when the optical signal passes through three servo points (which are the servo point s1-1 at the storage layer 1, the servo point s5-1 at the storage layer 5, and the servo point s9-1 at the storage layer 9). At storage layers except the storage layer 1, the storage layer 5, and the storage layer 9 in the storage layer 1 to the storage layer 12, no data content is written into positions of data points overlapping with the servo point s13-1 in the axial direction, that is, reflectivities of the positions of these data points at the storage layers do not change. In this way, when the optical signal acts on s13-1, the optical signal passes through the positions of these data points, and optical power attenuation of the optical signal is greatly reduced. This improves accuracy of reading the servo point s13-1 by the optical signal, and effectively improves servo efficiency of the system.

In a second possible implementation, at the p storage layers included in the optical storage medium 44, servo channels in data bands overlapping in the axial direction at each storage layer do not overlap in the axial direction. In this way, servo points at each of the p storage layers do not overlap in the axial direction.

It may be understood that, in this case, servo points on any servo channel of the optical storage medium 44 may be discretely distributed, or may be continuously distributed. This is not limited. When the servo points on the servo channel are discretely distributed, a distance between any two adjacent servo points on the servo channel is less than or equal to the second preset threshold.

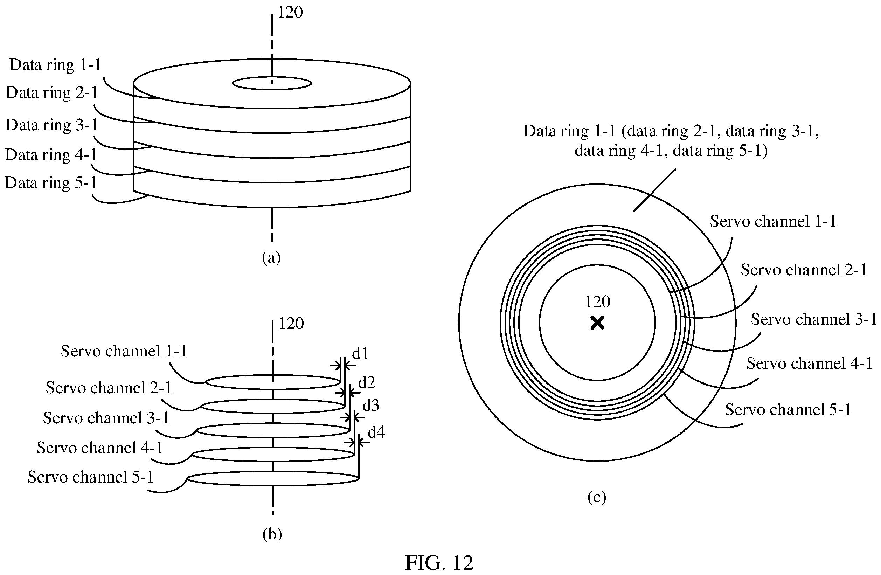

For example, FIG. 12 is a schematic diagram of servo channels that are in data bands overlapping in the axial direction at each of a plurality of storage layers and do not overlap in the axial direction.

(a) in FIG. 12 shows a front view of five annular data bands (referred to as data rings) overlapping in the axial direction. As shown in (a) in FIG. 12, a data ring 1-1 is a data ring at a storage layer 1, a data ring 2-1 is a data ring at a storage layer 2, a data ring 3-1 is a data ring at a storage layer 3, a data ring 4-1 is a data ring at a storage layer 4, and a data ring 5-1 is a data ring at a storage layer 5. It can be seen that the data ring 1-1, the data ring 2-1, the data ring 3-1, the data ring 4-1, and the data ring 5-1 overlap in the axial direction. The axial direction is a direction shown by an optical axis 120 in FIG. 12.

(b) in FIG. 12 shows a front view of circular servo channels that are in the five data rings overlapping in the axial direction shown in (a) in FIG. 12 and that do not overlap in the axial direction. It should be understood that a servo channel on a data ring is usually a circular servo channel. As shown in (b) in FIG. 12, a servo channel 1-1 is a servo channel in the data ring 1-1, a servo channel 2-1 is a servo channel in the data ring 2-1, a servo channel 3-1 is a servo channel in the data ring 3-1, a servo channel 4-1 is a servo channel in the data ring 4-1, and a servo channel 5-1 is a servo channel in the data ring 5-1.

It can be seen that a difference between a radius of the servo channel 1-1 and a radius of the servo channel 2-1 is d1, a difference between the radius of the servo channel 2-1 and a radius of the servo channel 3-1 is d2, a difference between the radius of the servo channel 3-1 and a radius of the servo channel 4-1 is d3, and a difference between the radius of servo channel 4-1 and a radius of servo channel 5-1 is d4. Herein, d1, d2, d3, and d4 may be the same or different. This is not limited. In other words, the servo channel 1-1, the servo channel 2-1, the servo channel 3-1, the servo channel 4-1, and the servo channel 5-1 do not overlap in the axial direction. In this case, servo points on the servo channel 1-1, the servo channel 2-1, the servo channel 3-1, the servo channel 4-1, and the servo channel 5-1 do not overlap in the axial direction, that is, servo points on the data ring 1-1, data ring 2-1, data ring 3-1, data ring 4-1, and data ring 5-1 do not overlap in the axial direction.

For clearer description, (c) in FIG. 12 shows a top view of five data rings overlapping in the axial direction, and circular servo bands that are in the five data rings and that do not overlap in the axial direction. As shown in (c) in FIG. 12, the data ring 1-1, the data ring 2-1, the data ring 3-1, the data ring 4-1, and the data ring 5-1 overlap in the axial direction, and the servo channel 1-1, the servo channel 2-1, the servo channel 3-1, the servo channel 4-1, and the servo channel 5-1 do not overlap in the axial direction. That is, servo points on the servo channel 1-1, the servo channel 2-1, the servo channel 3-1, the servo channel 4-1, and the servo channel 5-1 do not overlap in the axial direction.

It should be understood that, at any storage layer of the p storage layers, in a data channel overlapping with any servo channel in the axial direction, a data point in the data channel is empty, that is, the data read/write system 40 does not write any content into the data channel. In this design, when the data read/write system 40 reads the data and the optical signal used to read the data acts on the servo point at the storage layer far away from the surface of the optical storage medium 44, attenuation of the optical signal can be effectively reduced, so that the servo point at the storage layer far away from the surface of the optical storage medium 44 can be accurately read. This can effectively improve servo efficiency of the system. For specific descriptions, refer to the descriptions of improving the servo efficiency of the system in the first possible implementation. Details are not described herein again.

It should be noted that when the optical storage medium 44 includes a large quantity of storage layers (for example, there are 50, or 100 storage layers of the optical storage medium 44, and this is not limited), the data point read/write system 40 may write the servo point in the first possible implementation and the second possible implementation. In this case, the optical storage medium 44 may record data in a reflected light manner. In this way, the servo points are arranged in the two manners, which can effectively improve the servo efficiency of the data read/write system 40 when the data is read.

In a third possible implementation, at the p storage layers included in the optical storage medium 44, servo channels in data bands overlapping in the axial direction at each storage layer overlap in the axial direction.

In this case, servo points on any servo channel of the optical storage medium 44 may be discretely distributed or continuously distributed. This is not limited. When the servo points on the servo channel are discretely distributed, a distance between any two adjacent servo points on the servo channel is less than or equal to the second preset threshold.

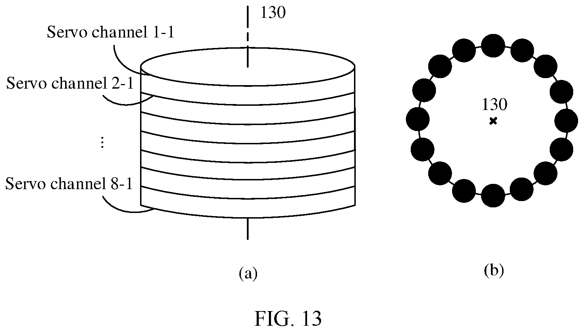

For example, FIG. 13 is a schematic diagram of servo points distributed on circular servo channels overlapping in the axial direction. (a) in FIG. 13 shows a front view of eight circular servo channels overlapping in the axial direction. As shown in (a) in FIG. 13, a servo channel at a storage layer 1 is a servo channel 1-1, a servo channel at a storage layer 2 is a servo channel 2-1, ..., and a servo channel at a storage layer 8 is a servo channel 8-1. It can be seen that the servo channel 1-1, the servo channel 2-1, ..., and the servo channel 8-1 overlap in the axial direction. The axial direction is a direction shown by an optical axis 130 in FIG. 13.

(b) in FIG. 13 shows a top view of the eight circular servo channels overlapping in the axial direction. As shown in (b) in FIG. 13, on any one of the servo channels overlapping in the axial direction, servo points may be continuously distributed as shown in (b) in FIG. 13, or certainly, may be discretely distributed. This is not limited.

It should be noted that, when the optical storage medium 44 includes a large quantity of storage layers (for example, there are 50, or 100 storage layers of the optical storage medium 44, and this is not limited), the data point read/write system 40 may write the servo point in the third possible implementation. In this case, the optical storage medium 44 may record data in a spontaneous fluorescence manner. In this way, the servo points are arranged in this manner, which can effectively improve the servo efficiency of the data read/write system 40 when the data is read. For related descriptions of the spontaneous fluorescence manner, refer to the foregoing descriptions. Details are not described herein again.

Certainly, when the optical storage medium 44 includes a small quantity of storage layers, and the data read/write system 40 arranges the written servo points in the third possible implementation, the optical storage medium 44 may also record the data in the reflected light manner.

It should be understood that, it can be learned from the foregoing descriptions that the data read/write system 40 separately deflects the optical signal in the plurality of preset periods, and writes the data points at different positions in the optical storage medium 44 at different moments in a process of moving the optical storage medium 44. Therefore, the data read/write system 40 can control the light source component 41 to generate, at a plurality of preset moments, a power of the initial optical signal used to write the servo point, so as to write the servo point arranged on the optical storage medium 44 in any one of the foregoing possible implementations.

The plurality of preset moments one-to-one correspond to the servo points arranged in any one of the foregoing possible implementations.

In this case, when the data read/write system provided in this embodiment of this application writes the data, it may be simply understood that the data read/write system sequentially deflects, by using the optical deflector, the first optical signal obtained after the initial optical signal generated by the light source component is modulated, to write, in the preset period, a row of data points on the optical storage medium. In addition, the data read/write system controls movement of the optical storage medium, to implement writing of a plurality of rows of data points into the optical storage medium in the movement direction of the optical storage medium in the plurality of preset periods. This implements writing of a data band including a plurality of data channels. In other words, the data read/write system provided in this embodiment of this application writes the data into the moving optical storage medium, to implement, by controlling the single optical signal, effect of simultaneously writing the plurality of data channels on the optical storage medium, that is, to implement, through the single optical signal, effect of writing the data in parallel on the optical storage medium. Therefore, this embodiment of this application improves data write efficiency of the data read/write system without increasing a rotational speed of the optical storage medium.

Further, when the data read/write system 40 provided in this embodiment of this application is configured to read data, the data read/write system further includes an optical signal separation module and an information processing module.

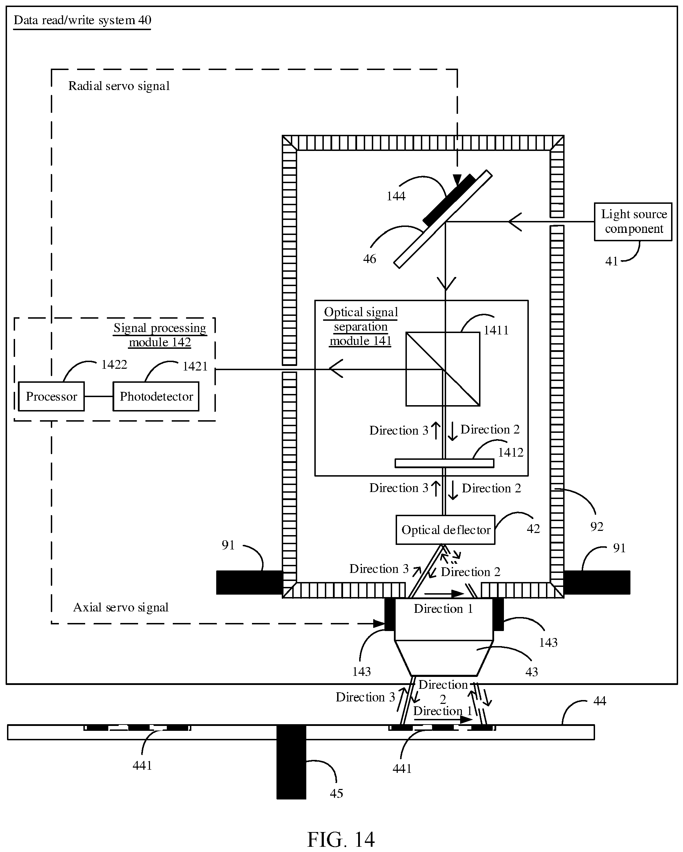

With reference to FIG. 9, refer to FIG. 14. As shown in FIG. 14, the data read/write system 40 further includes the optical signal separation module 141 and the information processing module 142.

It should be understood that when the data read/write system 40 is configured to read the data stored in the optical storage medium 44, the data stored in the optical storage medium 44 is written through the optical path of the data read/write system 40 described above.

It should be understood that, for related descriptions of the light source component 41, the reflector 46, the optical deflector 42, the read/write optical head 43, and the radial mobile station 91 in the data read/write system 40 when the data read/write system 40 is configured to read the data, refer to the foregoing related descriptions of the light source component 41, the reflector 46, the optical deflector 42, the read/write optical head 43, and the radial mobile station 91 when the data read/write system 40 is configured to write data. This is not described herein again.

It should be noted that, when the data read/write system 40 is configured to read the data, and the plurality of second optical signals obtained after the initial optical signal generated by the light source component 41 passes through the reflector 46 and the optical deflector 42 are sequentially focused on the optical storage medium 44 by the read/write optical head 43, physical and/or chemical properties of the second optical signals are not changed. In this embodiment of this application, descriptions are provided by using an example in which when the data read/write system 40 is configured to read the data, a power of the initial optical signal generated by the light source component 41 is a third preset power. It should be understood that when the optical signal having the third preset power acts on the optical storage medium 44, physical and/or chemical properties of the optical signal are/is not changed.

Optionally, the read/write optical head 43 may be disposed on a second mobile platform 143. The second mobile platform 143 may be configured to move the read/write optical head 43 in the axial direction, so as to adjust, in the axial direction, a position of a focus of an optical signal focused by the read/write optical head 43.

The second mobile platform 143 may receive an axial servo signal sent by a processor 1422 in the signal processing module 142, and may further move the read/write optical head 43 in the axial direction based on an indication of the axial servo signal, so as to adjust, in the axial direction, the position of the focus of the optical signal focused by the read/write optical head 43. Herein, for related descriptions of the axial servo signal, refer to the following. Details are not described herein again.

For example, the second mobile platform 143 may be a one-dimensional electric direct- mobile platform. For example, the second mobile platform 143 may be a z-axis electric platform. This is not limited thereto.

Optionally, the reflector 46 may be disposed on a third mobile platform 144. The third mobile platform 144 may be configured to move the reflector 46 in a radial direction perpendicular to the axial direction (referred to as a radial direction for short), so as to adjust, in the radial direction, the position of the focus of the optical signal focused by the read/write optical head 43.

The third mobile platform 144 may receive a radial servo signal sent by the processor 1422 in the signal processing module 142, and may further move the reflector 46 in the radial direction based on an indication of the radial servo signal, so as to adjust, in the radial direction, the position of the focus of the optical signal focused by the read/write optical head 43. Herein, for related descriptions of the radial servo signal, refer to the following. Details are not described herein again.

For example, the third mobile platform 144 may be a two-dimensional electric direct- mobile platform. For example, the third mobile platform 144 may be an xy-axis electric platform. This is not limited thereto.

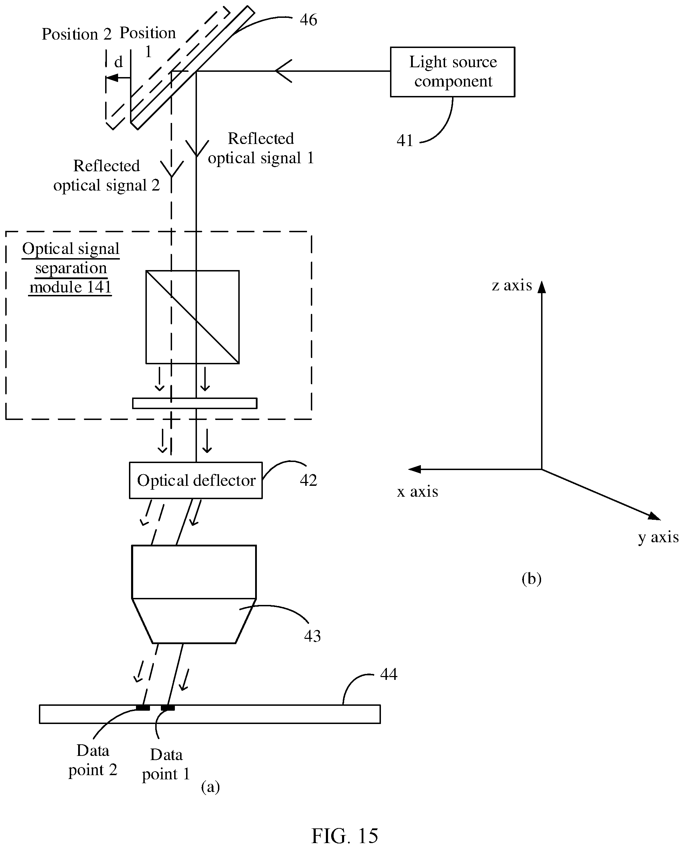

For example, with reference to FIG. 14, FIG. 15 is a schematic diagram of moving the reflector 46 by using the third mobile platform 144, to adjust, in the radial direction, the position of the focus of the optical signal focused by the read/write optical head 43.

As shown in (a) in FIG. 15, when the reflector 46 is in a position 1, the reflector 46 reflects the initial optical signal incident by the light source component 41, to obtain a reflected optical signal 1. The reflected optical signal 1 acts on the optical storage medium 44 after passing through the optical signal separation module 141, the optical deflector 42, and the read/write optical head 43, so as to read a data point 1 on the optical storage medium 44. It should be understood that a position of the data point 1 is a position of a focus of the optical signal focused by the read/write optical head 43 when the reflector 46 is in the position 1.

When the third mobile platform 144 (not shown in FIG. 15) controls the reflector 46 to move to a position 2 on an x axis on a plane in which the radial direction is located, in this case, the reflector 46 reflects the initial optical signal incident by the light source component 41, to a reflected optical signal 2. In this way, the reflected optical signal 2 acts on the optical storage medium 44 after passing through the optical signal separation module 141, the optical deflector 42, and the read/write optical head 43, to read a data point 2 on the optical storage medium 44. It should be understood that a position of the data point 2 is a position of a focus of the optical signal focused by the read/write optical head 43 when the reflector 46 moves to the position 2.

It can be learned that the third mobile platform 144 controls the reflector 46 to move in the radial direction, so as to move, in the radial direction, the position of the focus of the optical signal focused by the read/write optical head 43.

(b) in FIG. 15 is a schematic diagram of examples of the axial direction and the radial directions. As shown in (b) in FIG. 15, a z axis is the axial direction of the read/write optical head 43, and planes in which the x axis and a y axis are located are planes perpendicular to the axial direction. Therefore, the x axis and the y axis are the radial directions.

Still refer to FIG. 14. The optical signal separation module 141 is configured to: when the data read/write system 40 is configured to read the data, separate, from an optical path of an optical signal used to act on the optical storage medium 44, an optical signal returned after the optical storage medium 44 is acted on, to obtain a third optical signal.

It should be understood that the optical path of the optical signal used to act on the optical storage medium 44 is usually inverse to an optical path of the optical signal returned after the optical storage medium 44 is acted on. Herein, optical path phase inversion means that optical path channels are the same, but optical signals are propagated in opposite directions.

For example, as shown in FIG. 14, the optical signal used to read the data may act on the optical storage medium 44 in a direction 2. Then, after the optical signal acts on the optical storage medium 44, the optical signal returned by the optical storage medium 44 may return in a direction 3 shown in FIG. 13, and the optical signal separation module 141 separates the optical signal from the optical path of the optical signal used to act on the optical storage medium 44, so as to obtain the third optical signal.

In a possible case, if the optical storage medium 44 records the data in the spontaneous fluorescence manner, the optical signal returned by the optical storage medium 44 is a fluorescence signal autonomously transmitted by the optical storage medium 44 after the plurality of second optical signals sequentially act on the optical storage medium 44. In this case, the optical signal separation module 141 includes a dichroic mirror. The dichroic mirror herein can transmit long-wavelength laser light and reflect short-wavelength fluorescence.

In this way, the dichroic mirror can be used to separate the optical signal returned by the optical storage medium 44 from the optical path of the optical signal used to act on the optical storage medium, to obtain the third optical signal.

In another possible case, if the optical storage medium 44 records the data in the reflected light manner, the optical signal returned by the optical storage medium 44 is an optical signal reflected by the optical storage medium 44 after the plurality of second optical signals sequentially act on the optical storage medium 44. In this case, the optical signal separation module 141 may include a polarizing spectroscope 1411 and a wavelength board 1412. In this way, the polarizing spectroscope 1411 and the wavelength board 1412 can separate the optical signal returned by the optical storage medium 44 from the optical path of the optical signal used to act on the optical storage medium 44, to obtain the third optical signal.

For a process in which the optical signal used to read the data acts on the optical storage medium 44, refer to the foregoing process in which the optical signal used to write the data acts on the optical storage medium 44. Details are not described herein again.

The polarizing spectroscope 1411 is configured to receive the initial optical signal reflected by the reflector 46, and transmit the initial optical signal to the wavelength board 1412. In this embodiment of this application, an optical signal transmitted to the wavelength board 1412 is referred to as a fourth optical signal.

Specifically, the polarizing spectroscope 1411 may be configured to: after receiving the initial optical signal, transmit p-polarized light in the initial optical signal, and reflect s-polarized light in the initial optical signal. Herein, the fourth optical signal may be the p-polarized light, or the s-polarized light. This is not limited. As shown in FIG. 14, in this embodiment of this application, descriptions are provided by using an example in which the fourth optical signal is the p-polarized light.

For example, the polarizing spectroscope 1411 may be a polarizing light-splitting prism, or certainly may be another polarizing spectroscope. This is not limited.

The wavelength board 1412 is configured to receive the fourth optical signal transmitted by the polarizing spectroscope 1411, and perform phase adjustment on the fourth optical signal, to output the first optical signal; and also configured to receive the optical signal returned by the optical storage medium 44 through the read/write optical head 43 and the optical deflector 42, and adjust a phase of the optical signal, to emit a fifth optical signal. Herein, deflection statuses of the fourth optical signal and the fifth optical signal are different. For example, if the fourth optical signal is p-polarized light, the fifth optical signal is s-polarized light; or if the fourth optical signal is s-polarized light, the fifth optical signal is p-polarized light. In this embodiment of this application, descriptions are provided by using an example in which the fourth optical signal is the p-polarized light and the fifth optical signal is the s-polarized light.

After the first optical signal is processed by the optical deflector 42 and the read/write optical head 43 and acts on the optical storage medium 44, an optical signal obtained after the optical signal returned by the optical storage medium 44 is reversely processed by the read/write optical head 43 and the optical deflector 42 sequentially and passes through the wavelength board 1412 is the fifth optical signal.

For example, the wavelength board 1412 may be a 1/4 wavelength board. The 1/4 wavelength board can shift a phase of a received optical signal by 1/4 wavelength. Therefore, when the optical signal passes through the 1/4 wavelength board for two consecutive times, a deflection status of the optical signal changes. For example, after passing through the 1/4 wavelength board for two consecutive times, the p-polarized light changes to the s-polarized light; or after passing through the 1/4 wavelength board for two consecutive times, the s-polarized light changes to the p-polarized light.

In the data read/write system 40 provided in this embodiment of this application, the wavelength board 1412 is usually disposed. When the optical signal passes through the wavelength board 1412 and acts on the optical storage medium 44, the optical storage medium 44 may return the optical signal along an original path. In this way, the returned optical signal passes through the wavelength board 1412. It is equivalent to that the optical signal passes through the wavelength board 1412 for two consecutive times. In this way, if the fourth optical signal processed by the wavelength board 1412 for the first time is the p-polarized light, the fourth optical signal acts on the optical storage medium 44 after passing through the wavelength board 1412, the optical deflector 42, and the read/write optical head 43. The optical signal can be returned by the optical storage medium 44 along the original path and passes through the wavelength board 1412 again, to obtain the fifth optical signal, namely, the s-polarized light.

The polarizing spectroscope 1411 can be configured to receive the fifth optical signal, and reflect and output the fifth optical signal based on a polarizing light splitting principle, to obtain the third optical signal.

For example, with reference to FIG. 14, the following describes a process in which the optical signal separation module 141 separates the optical signal returned by the optical storage medium 44.

As shown in FIG. 14, after the initial optical signal reflected by the reflector 46 arrives at the polarizing spectroscope 1411, the p-polarized light in the initial optical signal passes through a working plane (namely, a diagonal surface of the polarizing spectroscope 1411, which is shown by using an oblique line in a square in FIG. 14) of the polarizing spectroscope 1411, so as to obtain the fourth optical signal, where the fourth optical signal is p-polarized light.

Then, the fourth optical signal arrives at the wavelength board 1412 along a direction 2, and passes through the wavelength board 1412, to obtain the first optical signal whose phase changes by 1/4 wavelength. Then, after the first optical signal is deflected by the optical deflector 42 and focused on the optical storage medium 44 by the read/write optical head 43, the optical signal returned by the optical storage medium 44 may arrive at the wavelength board 1412 in a direction 3 opposite to the direction 2. The fifth optical signal is obtained after the returned optical signal passes through the wavelength board 1412. Compared with a phase of the optical signal returned by the optical storage medium 44, a phase of the fifth optical signal changes by 1/4 wavelength. That is, compared with a phase of the fourth optical signal, the phase of the fifth optical signal changes by 1/2 wavelength. In this case, the fifth optical signal is the s-polarized light.

Further, the polarizing spectroscope 1411 receives the fifth optical signal. Because the fifth optical signal is the s-polarized light, the fifth optical signal is reflected and output by the working plane of the polarizing spectroscope 1411, to obtain the third optical signal. In this way, the optical signal separation module 141 separates, by changing a polarization status of the optical signal and using the polarizing spectroscope, the optical signal returned after the optical signal acts on the optical storage medium 44 from the optical path of the optical signal used to act on the optical storage medium 44.

The information processing module 142 includes a photodetector 1421 and the processor 1422. The processor 1422 may be a same processor as the processor 4133 in FIG. 5, or may be different processors. This is not limited.

The photodetector 1421 is configured to: receive the third optical signal separated by the optical signal separation module 141, convert the received third optical signal into an electrical signal, and send the electrical signal to the processor 1422 for processing. The processor 1422 may further process the electrical signal received from the photodetector 1421, to determine to-be-read data or determine a servo control signal.

The photodetector 1421 may be a photoelectric sensor, for example, may be a CCD. This is not limited.

Specifically, after receiving the third optical signal, the photodetector 1421 may determine light intensity of the third optical signal and spot information of a spot formed by the third optical signal on the photodetector 1421. The spot information includes a spot shape and a spot size. Then, the photodetector 1421 may send the determined light intensity and spot information of the third optical signal to the processor 1422 for further processing.

Then, in one case, if the third optical signal is an optical signal returned by the data read/write system 40 after acting on a data point used to store data on the optical storage medium 44, the third optical signal is a data optical signal. In this way, the processor 1422 can obtain the to-be-read data through decoding based on the light intensity of the third optical signal and a preset decoding rule.

It should be understood that data stored in the data read/write system 40 is data obtained after the to-be-read data is encoded according to a preset encoding rule. Therefore, the decoding rule corresponding to the encoding rule is preset in the data read/write system 40. In this way, when reading the to-be-read data, the data read/write system 40 can decode, according to the preset decoding rule, the data read from the optical storage medium, to obtain the to-be-read data.

In another case, if the third optical signal is an optical signal returned by the data read/write system 40 after acting on a servo point on the optical storage medium 44, the third optical signal is the servo optical signal. In this way, the processor 1422 can generate the servo control signal based on preset information of the servo point and the light intensity and the spot information of the third optical signal, to adjust a position of a focus of the optical signal focused by the read/write optical head 43.

It should be understood that, it can be learned from the foregoing description that the data read/write system 40 can control the light source component 41 to generate, at a plurality of preset moments, a power of the initial optical signal used to write the servo point, so as to write the servo point arranged on the optical storage medium 44 in any one of the foregoing possible implementations. The plurality of preset moments one-to-one correspond to the servo points arranged in any possible implementation. Therefore, the data read/write system 40 can determine, by determining whether a moment at which the third optical signal is received is a preset moment corresponding to the servo point, whether the third optical signal is the servo optical signal. A correspondence between a preset moment and a servo point is preset in the processor 1422.

The preset information of the servo point includes light intensity and spot information of the servo point. The light intensity and the spot information refer to light intensity and spot information that are detected by the photodetector 1421 and that are of an optical signal returned by the servo point when the optical signal used to read the data is accurately focused on the servo point. The returned optical signal may be a reflected optical signal or a fluorescence signal. This is not limited. A power of the optical signal used to read the data may be the third preset power.

The light intensity and the spot information in the preset information of the servo point may be obtained through pre-measurement.

For example, the data read/write system 40 may use the optical signal having the third preset power to accurately focus on any servo point (for example, powers written to all servo points are the same) on the optical storage medium 44 through the optical path of the data read/write system 40 in FIG. 14. Then, the photodetector 1421 receives an optical signal returned by the any servo point, and determines light intensity and spot information of the optical signal. In this way, the light intensity and the spot information are preset information of the servo point.

For ease of description, in this embodiment of this application, the light intensity in the preset information is referred to as first light intensity, and the spot information in the preset information is referred to as first spot information. In addition, in this embodiment of this application, the light intensity of the third optical signal received by the processor 1422 is referred to as second light intensity, and the spot information of the third optical signal received by the processor 1422 is referred to as second spot information.

In this way, the processor 1422 can determine the servo control signal based on the received second light intensity and second spot information, and the preset first light intensity and first spot information. The servo control signal includes at least one of a focus servo signal or a track servo signal.

In one aspect, the processor 1422 may determine, based on a spot size and a spot shape in the first spot information and a spot size and a spot shape in the second spot information, an adjustment direction when the servo control signal is used to adjust the position of the focus of the optical signal focused by the read/write optical head 43.

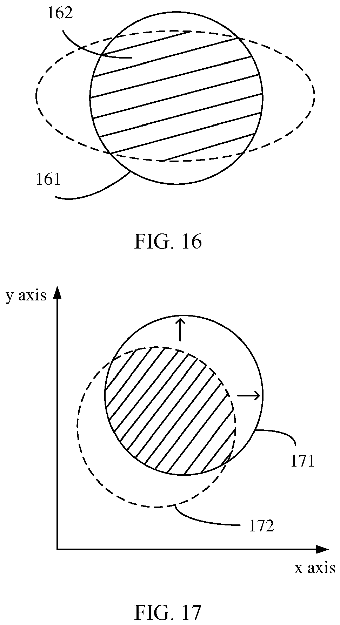

For example, FIG. 16 is a schematic diagram of an adjustment direction determined based on a spot size and a spot shape when the servo control signal is used to adjust the position of the focus of the optical signal focused by the read/write optical head 43.

As shown in FIG. 16, a solid circle represents a spot 161 in the preset information of the servo point. An overlapping part between the solid-line circle and a dashed-line circle represents the spot 162 corresponding to the third optical signal. As shown in FIG. 16, the processor 1422 may determine, based on shapes and sizes of the spot 161 and the spot 162, that the read/write optical head 43 does not accurately focus, on the optical storage medium 44, the optical signal used to act on the servo point. In addition, the processor 1422 may further determine a position of the focus of the optical signal that is focused by the read/write optical head 43 and needs to be adjusted in a direction close to the optical storage medium 44 in the axial direction of the read/write optical head 43.

FIG. 17 is a schematic diagram of another adjustment direction determined based on a spot size and a spot shape when the servo control signal is used to adjust the position of the focus of the optical signal focused by the read/write optical head 43.

As shown in FIG. 17, a solid circle represents a spot 171 in the preset information of the servo point. An overlapping part between the solid-line circle and a dashed-line circle represents the spot 172 corresponding to the third optical signal. As shown in FIG. 17, the processor 1422 may determine, based on shapes and sizes of the spot 171 and the spot 172, the position of the focus of the optical signal that is focused by the read/write optical head 43 and is adjusted in a positive direction of an x-axis and a positive direction of a y-axis in a radial direction (namely, the x-axis direction and the y-axis direction shown in FIG. 13) of the read/write light head 43.

In another aspect, the processor 1422 may determine a focusing error and a tracking error of the data read/write system 40 based on the first light intensity and the second light intensity.

Specifically, for any servo point, the processor 1422 may perform a difference between the first light intensity and the second light intensity, and determine the focusing error and the tracking error of the data read/write system 40 based on the difference.

Optionally, a designer may preset, in the processor 1422 based on a large quantity of test results in advance, a correspondence between a difference between different light intensity and the first light intensity and a focusing error and a tracking error of the data read/write system 40.

In this way, the processor 1422 can determine the focusing error and the tracking error of the data read/write system 40 based on the correspondence and the difference between the first light intensity and the second light intensity.

Then, when the focusing error determined by the processor 1422 is greater than a third preset threshold, the processor 1422 may generate the focus servo signal based on the determined adjustment direction and the determined focusing error, where the focus servo signal is used to indicate to adjust a position of the read/write optical head 43 in the axial direction of the read/write optical head 43, so as to adjust, in the axial direction, the position of the focus of optical signal focused by the read/write optical head 43.

It should be understood that, when the focusing error determined by the processor 1422 is less than the third preset threshold, the data read system 40 may accurately read the data stored in the optical storage medium. In this case, the data read system 40 may not perform focusing servo. That is, the data read system 40 does not need to adjust, in the axial direction, the position of the focus of the optical signal focused by the read/write optical head 43.

A case in which the focusing error is equal to the third preset threshold is not specifically limited in this embodiment of this application. For example, when the focusing error is equal to the third preset threshold, the processor 1422 may generate the focus servo signal, or may not generate the focus servo signal. This is not limited.

Optionally, a correspondence between different focusing errors and adjustment amounts for adjusting the position of the read/write optical head 43 in the axial direction may be preset in the processor 1422. The correspondence may be determined in advance based on a large quantity of experiments. This is not specifically limited.

When the tracking error determined by the processor 1422 is greater than a fourth preset threshold, the processor 1422 may generate the track servo signal based on the determined adjustment direction and the determined tracking error, where the track servo signal is used to indicate to adjust a position of the reflector 46 in the radial direction, so as to adjust, in the radial direction, the position of the focus of the optical signal focused by the read/write optical head 43.

It should be understood that, when the tracking error determined by the processor 1422 is less than the fourth preset threshold, the data read system 40 may accurately read the data stored in the optical storage medium 44. In this case, the data read system 40 may not perform tracking servo. That is, the data read system 40 does not need to adjust, in the radial direction, the position of the focus of the optical signal focused by the read/write optical head 43.

A case in which the radial error is equal to the fourth preset threshold is not specifically limited in this embodiment of this application. For example, when the radial error is equal to the fourth preset threshold, the processor 1422 may generate the radial servo signal, or may not generate the radial servo signal. This is not limited.

Optionally, a correspondence between different tracking errors and adjustment amounts for adjusting the position of the reflector 46 in the radial direction may be preset in the processor 1422. The correspondence may be determined in advance based on a large quantity of experiments. This is not specifically limited.

Values of the third preset threshold and the fourth preset threshold are not specifically limited in this embodiment of this application.

Then, after generating the focus servo signal, the processor 1422 may send the focus servo signal to the second mobile platform 143 shown in FIG. 14, so that the second mobile platform 143 controls, based on the indication of the focus servo signal, the read/write optical head 43 to move in the axial direction, so as to adjust, in the axial direction, the position of the focus of the optical signal focused by the read/write optical head 43.

Then, after generating the track servo signal, the processor 1422 may send the track servo signal to the third mobile platform 144 shown in FIG. 14, so that the third mobile platform 144 controls, based on the instruction of the track servo signal, the reflector 46 to move in the radial direction, so as to adjust, in the radial direction, the position of the focus of the optical signal focused by the read/write optical head 43.

It may be understood that the data read/write system 40 usually first performs servo on the focusing error of the system. In this way, when the data read/write system 40 reads a next data point of a current data point, after being focused by the read/write optical head 43, an optical signal used to read the next data point may be focused on the next data point. This can eliminate the focusing error of the system. Then, the data read/write system 40 performs servo on the tracking error of the system, to eliminate the tracking error of the system.

It can be learned that in a data point servo addressing solution used when the data is read in this embodiment of this application, servo addressing is performed by using a separate data point as a servo point. Compared with a solution in the conventional technology in which a servo optical signal used to determine a servo control signal needs to be extracted from a data optical signal based on frequency information, the solution provided in this embodiment of this application is more convenient and efficient.

In this way, when the data read/write system provided in this embodiment of this application reads the data, it may be simply understood that the data read/write system sequentially deflects, by using the optical deflector, the first optical signal obtained after the initial optical signal generated by the light source component is modulated, to read, in the preset period, a row of data points on the optical storage medium. In addition, the data read/write system controls movement of the optical storage medium, to implement reading of a plurality of rows of data points on the optical storage medium in a movement direction of the optical storage medium in the plurality of preset periods. This implements reading of a data band including a plurality of data channels. In other words, the data read/write system provided in this embodiment of this application reads the data on the moving optical storage medium, to implement, by controlling the single optical signal, effect of simultaneously reading the plurality of data channels on the optical storage medium, that is, to implement, through the single optical signal, effect of reading the data in parallel on the optical storage medium. Therefore, this embodiment of this application improves data read efficiency of the data read/write system without increasing a rotational speed of the optical storage medium.

In addition, the data read/write system provided in this embodiment of this application can perform efficient servo addressing while efficiently reading data, and this improves data read accuracy.

It should be noted that the data read/write system 40 shown in FIG. 14 shows only core components/modules of the data read/write system 40, and a structure shown in FIG. 14 does not constitute a limitation on the data read/write system 40. In addition to the components/modules shown in FIG. 14, the data read/write system 40 may include more or fewer components or modules than those shown in the figure, or have different component/module arrangements, or the like. For example, if the optical deflector in the data read/write system 40 is a rotating mirror, the data read/write system 40 may further include an f-θ mirror. For another example, the data read/write system 40 may further include a connection circuit between the processor 1422 and the first mobile platform 45, a connection circuit between the processor 1422 and the second mobile platform 143, and a connection circuit between the processor 1422 and the third mobile platform 144. Details are not described herein again.

It should be further understood that the foregoing data read/write system 40 is described by using an example in which the optical deflector 42 deflects the first optical signal including only the single optical signal. Certainly, the optical deflector 42 may also deflect an array optical signal including a plurality of optical signals to obtain a plurality of array optical signals, so as to implement of reading/writing of one data block. In this way, the array optical signal is sequentially deflected by the optical deflector 42 in each of a plurality of preset periods to obtain the plurality of array optical signals, so as to implement reading/writing of a data band including a plurality of data blocks. This can further improve a data read/write speed.

The array optical signal may be a one-dimensional or two-dimensional array signal. For example, the array optical signal includes 1*j optical signals, or the array optical signal includes k*j optical signals. This is not limited. Both j and k are integers greater than 1.

It should be further understood that when the array optical signal is the one-dimensional array optical signal, and the one-dimensional array optical signal is input into the optical deflector 42, a plane on which the one-dimensional array optical signal is located and a plane on which an optical signal deflected by the optical deflector 42 have a preset included angle. That is, the plane on which the one-dimensional array optical signal is located and the plane on which the optical signal deflected by the optical deflector 42 is located are not in a same plane. In this way, the one-dimensional array optical signal may be deflected by the optical deflector 42 into a plurality of one-dimensional array optical signals within a preset period, so as to implement reading/writing of a data band including a plurality of data blocks.

In this case, the data read/write system 40 may further include an optical device such as a beam splitter that splits an optical signal generated by the light source component into an array optical signal. Details are not described herein again.

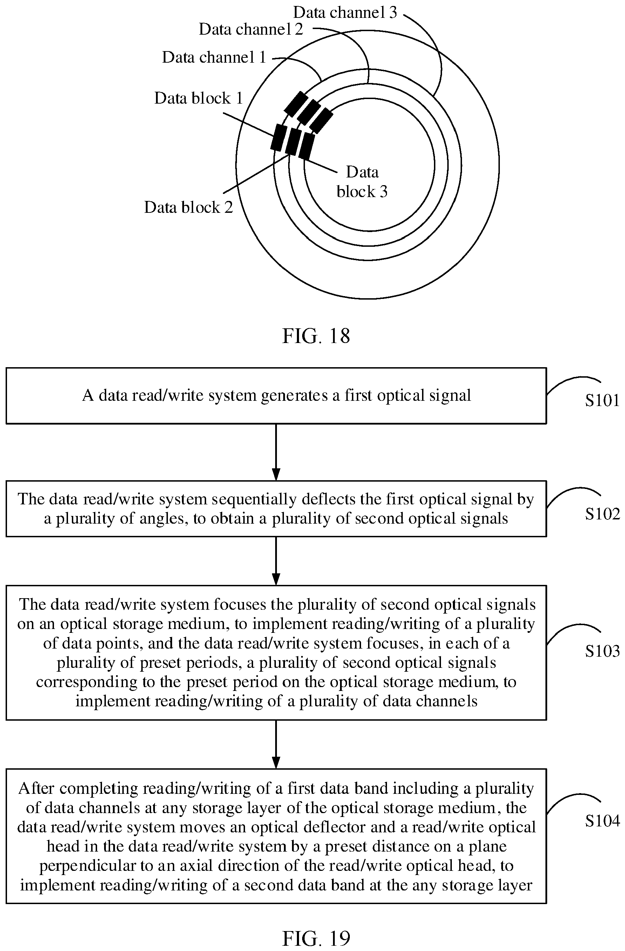

FIG. 18 is a schematic diagram of a data band including a plurality of data blocks. As shown in FIG. 18, on a circular optical storage medium, a data channel 1, a data channel 2, and a data channel 3 form a ring data band. A data block 1 is a data point set on the data channel 1, a data block 2 is a data point set on the data channel 2, and a data block 3 is a data point set on the data channel 3. A plurality of data points in the data point set are simultaneously written into the optical storage medium after the array optical signal is deflected by the optical deflector.

The following describes the data read/write method provided in embodiments of this application with reference to the accompanying drawings.

FIG. 19 is a schematic flowchart of a data read/write method according to an embodiment of this application. The method is applied to the data read/write system 40 shown in FIG. 14. The method may include the following steps.

S101: The data read/write system generates a first optical signal.

For description of the first optical signal, refer to the related description of the first optical signal. Details are not described herein again.

Specifically, for a process in which the data read/write system generates the first optical signal, refer to the description of obtaining the first optical signal based on the initial optical signal generated by the light source component 41. Details are not described herein again.

S102: The data read/write system sequentially deflects the first optical signal by a plurality of angles, to obtain a plurality of second optical signals.

Specifically, the data read/write system may sequentially deflect the first optical signal by the plurality of angles in a preset period, to obtain the plurality of second optical signals.

For the description that the data read/write system sequentially deflects the first optical signal by the plurality of angles in the preset period to obtain the plurality of second optical signals, refer to the description that the optical deflector 42 sequentially deflects the first optical signal by the plurality of angles to obtain the plurality of second optical signals. Details are not described herein again.

S103: The data read/write system focuses the plurality of second optical signals on an optical storage medium, to implement reading/writing of a plurality of data points, and the data read/write system focuses, in each of a plurality of preset periods, a plurality of second optical signals corresponding to the preset period on the optical storage medium, to implement reading/writing of a plurality of data channels.

The plurality of data channels include a plurality of data points read and written by the data read/write system in one preset period, and the plurality of data channels one-to-one correspond to the plurality of data points.

For the description that the data read/write system focuses the plurality of second optical signals on the optical storage medium, to implement reading/writing of the plurality of data points, and the data read/write system focuses, in each of the plurality of preset periods, the plurality of second optical signals corresponding to the preset period on the optical storage medium, to implement reading/writing of the plurality of data channels, refer to the description that the read/write optical head 43 focuses the plurality of second optical signals on the optical storage medium, to implement reading/writing of the plurality of data points and data channels. Details are not described herein again.

Further, when the data read/write system reads data, after the data read/write system controls any one of the plurality of second optical signals to act on the optical storage medium, that is, after the any one of the plurality of optical signals acts on a data point in the optical storage medium, the data point in the optical storage medium may return a third optical signal. In this way, the data read/write system can generate a servo control signal based on the third optical signal; or the data read/write system determines, based on the third optical signal, the to-be-read data.

If the any data point is a servo point, the third optical signal is a servo optical signal, that is, the data read/write system can generate the servo control signal based on the third optical signal.

If the any data point is used to store data, the third optical signal is a data optical signal, that is, the data read/write system can determine, based on the third optical signal, the to-be-read data.

For the description that the data read/write system generates the servo control signal based on the third optical signal and the data read/write system determines, based on the third optical signal, the to-be-read data, refer to the descriptions that the information processing module 142 generates the servo control signal based on the third optical signal and determines, based on the third optical signal, the to-be-read data. Details are not described herein again.

S104: After completing reading/writing of a first data band including a plurality of data channels at any storage layer of the optical storage medium, the data read/write system moves an optical deflector and a read/write optical head in the data read/write system by a preset distance on a plane perpendicular to an axial direction of the read/write optical head, to implement reading/writing of a second data band at the any storage layer.

For the description that after completing reading/writing of the first data band including the plurality of data channels at the any storage layer of the optical storage medium, the data read/write system moves the optical deflector and the read/write optical head in the data read/write system by the preset distance on the plane perpendicular to the axial direction of the read/write optical head, to implement reading/writing of the second data band at the any storage layer, refer to the description that the data read/write system, moves the optical deflector and the read/write optical head by using the radial mobile station 91, to implement reading/writing of different data bands. Details are not described herein again.

In conclusion, embodiments of this application provide the data read/write system and method. The system sequentially deflects, by using the optical deflector, the first optical signal obtained after the initial optical signal generated by the light source component is modulated, to implement, in the preset period, reading/writing of a row of data points on the optical storage medium. In addition, the data read/write system controls movement of the optical storage medium, to implement reading/writing of a plurality of rows of data points on the optical storage medium in a movement direction of the optical storage medium in the plurality of preset periods. This implements reading/writing of a data band including a plurality of data channels. In other words, the data read/write system provided in this application reads/writes the data on/into the moving optical storage medium, to implement, by controlling the single optical signal, effect of simultaneously reading/writing the plurality of data channels on/into the optical storage medium, that is, to implement, through the single optical signal, effect of reading/writing the data in parallel on/into the optical storage medium. Therefore, embodiments of this application improve data read/write efficiency of the data read/write system without increasing the rotational speed of the optical storage medium.

In addition, the data read/write system provided in embodiments of this application can perform efficient servo addressing while efficiently reading data, and this improves data read accuracy.

To describe beneficial effect brought by the data read/write system provided in embodiments of this application more clearly, descriptions are provided below by using actual application as an example.

An initial optical signal generated by a light source component is a single optical signal, an optical deflector is an acousto-optic deflector, and a frequency of a deflected optical signal is 300 kHz. For example, a scanning range of a read/write optical head (a position range of an optical signal that is obtained by deflecting by the optical deflector and is focused by the read/write optical head on an optical storage medium) is 300 $\mu$m, and a diameter of a single bit (namely, a single data point (one data point represents one bit)) is 200 nm. A read/write bandwidth that can be implemented by a data read/write system provided in an embodiment of this application is 300 kHz $\times$ 300 $\mu$m $\div$ 200 nm/bit = 56.25 MB/s.

In this case, for example, the optical storage medium is a circular optical disc, and the optical disc rotates by using a first mobile platform. If a channel spacing between two adjacent data channels on the optical disc (namely, a distance between centers of two parallel data points on the two data channels) is 400 nm. Therefore, a linear velocity of the first mobile platform used to rotate the optical disc is only: v = 300 kHz $\times$ 400 nm = 120 mm/s.

In this case, based on a formula $n = \dfrac{v}{\pi D}$ for calculating a rotation speed n, when the linear velocity v is 120 mm/s, if a diameter D of an outer ring of the optical disc is 120 mm and a diameter D of an inner ring of the optical disc is 40 mm, a rotation speed of the outer ring of the first mobile platform for rotating the optical disc is:

$$n \text{ (outer ring)} = \frac{120 \text{ mm/s}}{3.14 \times 120\text{mm}} = 0.318 \text{ r/s}, \quad \text{and}$$

$$n \text{ (inner circle)} = \frac{120 \text{ mm/s}}{3.14 \times 40\text{mm}} = 0.956 \text{ r/s}$$

. If a diameter D of an outer ring of the optical disc is 240 mm and a diameter D of an inner ring is 40 mm, rotation speeds of the first mobile platform for rotating the optical disc are:

$$n \text{ (outer ring)} = \frac{120 \text{ mm/s}}{3.14 \times 240\text{mm}} = 0.159 \text{ r/s}, \quad \text{and}$$

$$n \text{ (inner ring)} = \frac{120 \text{ mm/s}}{3.14 \times 40\text{mm}} = 0.956 \text{ r/s}$$

.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data read/write system, wherein the system comprises:

   an optical deflector, configured to sequentially deflect a first optical signal by a plurality of angles, to obtain a plurality of second optical signals; and
   a read/write optical head, configured to: receive the plurality of second optical signals, and separately focus the plurality of second optical signals on an optical storage medium, to implement reading/writing of a plurality of data points.

2. The system according to claim 1, wherein the system further comprises:

   a mobile platform, configured to accommodate the optical storage medium, and configured to control the optical storage medium to rotate or translate on a plane perpendicular to an axial direction of the read/write optical head, wherein the optical deflector is specifically configured to sequentially deflect the first optical signal by the plurality of angles in each of a plurality of preset periods, to obtain the plurality of second optical signals; and
   the read/write optical head is further configured to receive the plurality of second optical signals in each preset period, and separately focus the plurality of second optical signals on the optical storage medium, to implement reading/writing of a plurality of data channels, wherein the plurality of data channels comprise the plurality of data points, and the plurality of data channels one-to-one correspond to the plurality of data points.

3. The system according to claim 1 or 2, wherein the optical deflector comprises at least one of the following devices: a multi-faceted rotating mirror, a vibrating mirror, an acousto-optic deflector, or an electro-optic deflector.

4. The system according to claim 2 or 3, wherein the plurality of data channels comprise at least one servo channel, and a plurality of servo points on the servo channel are discretely distributed, wherein the servo point is configured to adjust, during data reading, a position of a focus of an optical signal focused by the read/write optical head.

5. The system according to claim 4, wherein a distance between any two adjacent servo points in the plurality of servo points is greater than or equal to a preset distance.

6. The system according to any one of claims 1 to 5, wherein the optical storage medium comprises a plurality of storage layers, servo points at the plurality of storage layers are discretely distributed in the axial direction of the read/write optical head, and the servo point is configured to adjust, during data reading, the position of the focus of the optical signal focused by the read/write optical head.

7. The system according to any one of claims 2 to 6, wherein the plurality of data channels form one data band, and the system further comprises:
a radial mobile station, configured to move the optical deflector and the read/write optical head by the preset distance on the plane perpendicular to the axial direction of the read/write optical head after reading/writing of a first data band at a first storage layer of the plurality of storage layers of the optical storage medium is completed, to implement reading/writing of a second data band at the first storage layer, wherein the first storage layer comprises a plurality of data bands.

8. The system according to any one of claims 1 to 7, wherein the system further comprises a signal processing module,

configured to receive a third optical signal during data reading, wherein the third optical signal is an optical signal returned by the optical storage medium after any one of the plurality of second optical signals acts on any data point on the optical storage medium; and
configured to: when the third optical signal is a servo optical signal, generate a servo control signal based on the third optical signal, wherein the servo control signal is configured to adjust the position of the focus of the optical signal focused by the read/write optical head; or configured to: when the third optical signal is a data optical signal, determine, based on the third optical signal, to-be-read data, wherein
if the any data point is a servo point, the third optical signal is the servo optical signal; or if the any data point is configured to store data, the third optical signal is the data optical signal.

9. The system according to any one of claims 1 to 8, wherein the system further comprises:
a light source component, configured to obtain the first optical signal.

10. A data read/write method, applied to a data read/write system, wherein the method comprises:

sequentially deflecting a first optical signal by a plurality of angles, to obtain a plurality of second optical signals; and
focusing the plurality of second optical signals on an optical storage medium, to implement reading/writing of a plurality of data points.

11. The method according to claim 10, wherein the method further comprises:

controlling the optical storage medium to rotate or translate on a plane perpendicular to an axial direction of a read/write optical head in the data read/write system;
the sequentially deflecting a first optical signal by a plurality of angles, to obtain a plurality of second optical signals comprises:

sequentially deflecting the first optical signal by the plurality of angles in each of a plurality of preset periods, to obtain the plurality of second optical signals; and
the method further comprises:
focusing the plurality of second optical signals on the optical storage medium in each preset period, to implement reading/writing of a plurality of data channels, wherein the plurality of data channels comprise the plurality of data points, and the plurality of data channels one-to-one correspond to the plurality of data points.

12. The method according to claim 10 or 11, wherein the sequentially deflecting a first optical signal by a plurality of angles, to obtain a plurality of second optical signals comprises:

sequentially deflecting, by an optical deflector in the data read/write system, the first optical signal by the plurality of angles, to obtain the plurality of second optical signals, wherein the optical deflector comprises at least one of the following devices: a multifaceted rotating mirror, a vibrating mirror, an acousto-optic deflector, or an electro-optic deflector.

13. The method according to claim 11 or 12, wherein the plurality of data channels comprise at least one servo channel, and a plurality of servo points on the servo channel are discretely distributed, wherein the servo point is configured to adjust, during data reading, a position of a focus of an optical signal focused by the read/write optical head.

14. The method according to claim 13, wherein a distance between any two adjacent servo points in the plurality of servo points is greater than or equal to a preset distance.

15. The method according to any one of claims 10 to 14, wherein the optical storage medium comprises a plurality of storage layers, servo points at the plurality of storage layers are discretely distributed in the axial direction of the read/write optical head in the data read/write system, and the servo point is configured to adjust, during data reading, the position of the focus of the optical signal focused by the read/write optical head.

16. The method according to any one of claims 11 to 15, wherein the plurality of data channels form one data band, and the method further comprises:

after completing a read/write operation on a first data band at a first storage layer of the plurality of storage layers of the optical storage medium, moving the optical deflector and the read/write optical head in the data read/write system by the preset distance on the plane perpendicular to the axial direction of the read/write optical head, to implement reading/writing of a second data band at the first storage layer, wherein the first storage layer comprises a plurality of data bands.

17. The method according to any one of claims 10 to 16, wherein the method further comprises:

when a third optical signal is a servo optical signal, generating a servo control signal based on the third optical signal, wherein the servo control signal is configured to adjust a position of a focus of an optical signal focused by the read/write optical head in the data read/write system; or when the third optical signal is a data optical signal, determining, based on the third optical signal, to-be-read data, wherein

the third optical signal is an optical signal returned by the optical storage medium after any one of the plurality of second optical signals acts on any data point on the optical storage medium; and

if the any data point is a servo point, the third optical signal is the servo optical signal; or if the any data point is configured to store data, the third optical signal is the data optical signal.

18. The method according to any one of claims 10 to 17, wherein before the sequentially deflecting a first optical signal by a plurality of angles, to obtain a plurality of second optical signals, the method further comprises: generating the first optical signal.

Optical signal 12

RF signal

Acousto-optic deflector 11

$\Delta\theta$

Direction 1

Optical signal 1

Optical signal 2

Optical signal n

FIG. 1

21

z

B

211

$\Delta z$

20

A

y

x

FIG. 2

FIG. 3

FIG. 4

FIG. 5

Data read/write system 40

Light source component

46

41

Optical deflector

42

Direction 1

43

Direction 1

44

441

441

45

FIG. 6

First optical signal

Optical deflector

42

Optical signal 1

Optical signal 3

Optical signal 2

Direction 1

43

Direction 1

44

A     B     C

FIG. 7

A B C
● ● ●
→
Direction 1

44

(a)

Data channel 3
Data channel 2
Data channel 1
**Direction 2**
A
α
B
Direction 1
C
44
Rotation
direction

(b)

A B C
● ● ●
→
Direction 1

44

(c)

Data
channel 2
Data
channel 1
Data
channel 3
**Direction 3**
A
β
B
Direction 1
C
44
Movement
direction

(d)

FIG. 8

EP 4 235 665 A1

FIG. 9

FIG. 10

FIG. 11

(a)

(b)

L1 L2 L3 110

S1-1
Servo channel 1-1
S2-1
Servo channel 2-1
S3-1
Servo channel 3-1
Servo channel 4-1
S5-1
Servo channel 5-1
S4-1
⋮
Servo channel 8-1
S9-1
Servo channel 9-1
⋮
Servo channel 12-1
S13-1
Servo channel 13-1
⋮
Servo channel 16-1

S1-2

S4-1
S3-1
S2-1
S1-1

S1-2
S2-2
S3-2
S4-2
110

Data ring 1-1
Data ring 2-1
Data ring 3-1
Data ring 4-1
Data ring 5-1

120

(a)

Servo channel 1-1
Servo channel 2-1
Servo channel 3-1
Servo channel 4-1
Servo channel 5-1

120

d1
d2
d3
d4

(b)

Data ring 1-1 (data ring 2-1, data ring 3-1, data ring 4-1, data ring 5-1)

Servo channel 1-1
Servo channel 2-1
Servo channel 3-1
Servo channel 4-1
Servo channel 5-1

120

(c)

FIG. 12

EP 4 235 665 A1

Servo channel 1-1

Servo channel 2-1

⋮

Servo channel 8-1

130

130
×

(a)

(b)

FIG. 13

FIG. 14

Position 2 Position 1

d

46

Light source component

41

Reflected optical signal 1

Reflected optical signal 2

Optical signal separation module 141

z axis

x axis

y axis

(b)

Optical deflector 42

43

44

Data point 2  Data point 1

(a)

FIG. 15

162

161

FIG. 16

y axis

171

172

x axis

FIG. 17

Data channel 3

Data channel 2

Data channel 1

Data block 1

Data
block 3

Data block 2

FIG. 18

| A data read/write system generates a first optical signal | S101 |

| The data read/write system sequentially deflects the first optical signal by a plurality of angles, to obtain a plurality of second optical signals | S102 |

| The data read/write system focuses the plurality of second optical signals on an optical storage medium, to implement reading/writing of a plurality of data points, and the data read/write system focuses, in each of a plurality of preset periods, a plurality of second optical signals corresponding to the preset period on the optical storage medium, to implement reading/writing of a plurality of data channels | S103 |

| After completing reading/writing of a first data band including a plurality of data channels at any storage layer of the optical storage medium, the data read/write system moves an optical deflector and a read/write optical head in the data read/write system by a preset distance on a plane perpendicular to an axial direction of the read/write optical head, to implement reading/writing of a second data band at the any storage layer | S104 |

FIG. 19

## INTERNATIONAL SEARCH REPORT

International application No.

**PCT/CN2021/130165**

| A. | CLASSIFICATION OF SUBJECT MATTER |
|---|---|

G11B 7/0045(2006.01)i

According to International Patent Classification (IPC) or to both national classification and IPC

| B. | FIELDS SEARCHED |
|---|---|

Minimum documentation searched (classification system followed by classification symbols)

G11B

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; IEEE: 读写, 读取, 存取, 写入, 速度, 速率, 衍射, 光栅, 布拉格, 同时, 并行, 多路, 光偏转, 转镜, 振镜, 声光, 分光, 聚焦, 伺服, splitter, read+, writ+, parallel, simultaneous, bragg, scatter+, diffraction, acousto optical deflector, focus, servo

| C. | DOCUMENTS CONSIDERED TO BE RELEVANT | |
|---|---|---|
| Category* | Citation of document, with indication, where appropriate, of the relevant passages | Relevant to claim No. |
| X | CN 1328324 A (INDUSTRIAL TECHNOLOGY RESEARCH INSTITUTE) 26 December 2001 (2001-12-26)<br>    description page 1 line 22 to page 5 line 1, figures 1, 2 | 1-18 |
| X | US 4459690 A (RCA CORP.) 10 July 1984 (1984-07-10)<br>    description, column 3, line 41 to column 7, line 17, and figures 1-3 | 1-18 |
| A | CN 101053025 A (KONINKL PHILIPS ELECTRONICS NV.) 10 October 2007 (2007-10-10)<br>    entire document | 1-18 |
| A | CN 103676499 A (SHANGHAI INSTITUTE OF OPTICS AND FINE MECHANICS,<br>CHINESE ACADEMY OF SCIENCES) 26 March 2014 (2014-03-26)<br>    entire document | 1-18 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2022** | **27 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| CN | 1328324 | A | 26 December 2001 | CN | 1133993 | C | 07 January 2004 |
| US | 4459690 | A | 10 July 1984 | | None | | |
| CN | 101053025 | A | 10 October 2007 | MX | 2007005196 | A | 20 June 2007 |
| | | | | US | 2009059776 | A1 | 05 March 2009 |
| | | | | JP | 2008519386 | A | 05 June 2008 |
| | | | | TW | 200630981 | A | 01 September 2006 |
| | | | | KR | 20070084606 | A | 24 August 2007 |
| | | | | WO | 2006048813 | A1 | 11 May 2006 |
| | | | | CA | 2586029 | A1 | 11 May 2006 |
| | | | | EP | 1810287 | A1 | 25 July 2007 |
| | | | | SG | 132008 | A1 | 28 June 2007 |
| CN | 103676499 | A | 26 March 2014 | CN | 103676499 | B | 13 May 2015 |

Form PCT/ISA/210 (patent family annex) (January 2015)